# EUROPEAN PATENT APPLICATION

(11) **EP 3 354 866 A1**
(43) Date of publication of application: **01.08.2018**
(21) Application number: 18153400.9
(22) Date of filing: 25.01.2018
(51) Int. Cl.: F01D 25/28

(54) **GAS TURBINE SYSTEM**

(30) Priority: 26.01.2017 IT 201700008681
(71) Applicant: Nuovo Pignone Tecnologie SrL, 50127 Florence (IT)
(72) Inventor: RUSSO, Alessandro, 50127 Florence (IT); DEL BONO, Alessandro, 50127 Florence (IT); MEI, Luciano, 50127 Florence (IT); CIOFINI, Maurizio, 50127 Florence (IT); SHAMIM, Abdus, 10040 Rivalta di Torino (IT); BALADI, Mehdi Milani, 10040 Rivalta di Torino (IT); POSTACCHINI, Alessio, 50127 Florence (IT); DUMM, Bernard W., West Chester, OH Ohio 45069-4846 (US); HAYDEN, Jason, Louisville, KY Kentucky 40225-0001 (US); CARTOCCI, Gabriele, 50127 Florence (IT); CARATELLI, Francesco, 50127 Florence (IT)
(74) Representative: Illingworth-Law, William Illingworth

(57) **Abstract**

The gas turbine system (1) comprises an aeroderivative gas turbine engine (2) and a load (3) having a shaft line (6) drivingly coupled to the gas turbine engine (2). The gas turbine engine (2) comprises a high-pressure turbine section (61) and a high-pressure compressor section (19), drivingly coupled to one another by a first turbine shaft (91). The gas turbine engine (2) further comprises an intermediate-pressure turbine section (63) and a low-pressure compressor section (17), drivingly coupled to one another by a second turbine shaft (92), coaxial to the first turbine shaft (91). Furthermore, a combustor section (13) is provided, fluidly coupled to the high-pressure compressor section (19) and to the high-pressure turbine section (61). A free power turbine (81), supported by a third turbine shaft (93) which is mechanically uncoupled from the first turbine shaft (91) and the second turbine shaft (92), and is directly coupled to the shaft line (6), such that the shaft line (6) and the third turbine shaft (93) rotate at the same rotational speed. The free power turbine is adapted to generate a mechanical power rating of at least 65MW under ISO day conditions.

## Description

### TECHNICAL FIELD

The present disclosure concerns gas turbine engines. Embodiments disclosed herein specifically concern systems comprising gas turbine engines as prime movers for driving a load, mainly in mechanical drive applications.

### BACKGROUND ART

Gas turbine engines are extensively used as prime movers for driving rotating machinery, both in electric generation as well as in mechanical drive applications. As understood herein, electric generation applications are those applications wherein electric generators are driven by a gas turbine engine. These systems convert chemical energy of a fuel into useful electric energy. As understood herein mechanical drive applications are those applications wherein gas turbine engines drive rotating equipment other than electric generators, for instance pumps or compressors, such as single-stage or multi-stage axial or centrifugal compressors.

A key issue in systems using gas turbine engines as prime movers is the availability of the gas turbine engine. The prime mover requires periodic maintenance interventions and may require repairing or replacement of parts or components, which are subject to wear or malfunctioning. It is important that any maintenance or repairing intervention is performed such that the machine waiting time, i.e. the time during which the gas turbine engine is unavailable, be kept as short as possible. In this respect, reducing maintenance interventions, increasing the time between maintenance activities and increasing the mean time between failures is particularly important.

In some applications, the compactness of the gas turbine engine system becomes critical. Specifically, in offshore applications, where the gas turbine engines and the machinery driven thereby are installed on a floating vessel or on an offshore platform, there is a need to reduce the overall footprint of the mechanical equipment, since the space available is small. High power density is therefore important.

Gas turbine engines are often used as prime movers to rotate refrigerant compressors of natural gas liquefaction systems, i.e. systems for transforming natural gas from a gas well or the like into liquefied natural gas (LNG) for transportation purposes. LNG can be transported more economically and safely from the site of gas extraction to the site of use. Natural gas is often extracted from subsea wells, and the natural gas liquefaction system must therefore be arranged on an onshore or offshore platform or floating vessel, where the space availability is critical. Natural gas is liquefied by extracting heat therefrom using one or more refrigerant fluid circuits. Various combinations of refrigerant circuits are known in the art, using one or more different refrigerants. One or more gas compressors, driven by one or more prime movers are used to compress the refrigerant fluid, in a gaseous form, prior to cooling and/or condensing the compressed refrigerant and expanding the compressed and cooled refrigerant in an expansion equipment, to chill the refrigerant. The chilled refrigerant is then used to remove heat by heat exchange against the natural gas or another refrigerant fluid, in a pre-cooling cycle for instance, depending upon the structure and layout of the LNG system and cycle used.

Even though electric motors are sometimes used as prime movers in LNG applications, especially in offshore installations gas turbine engines are sometimes preferred, since they can use part of the extracted natural gas as an energy source to produce the mechanical power needed to drive the refrigerant compressors.

In some systems, gas turbine engines are used to produce mechanical power which is used to drive electric generators. The electric power generated by the electric generators is then converted back into mechanical power by electric motors and used to drive the refrigerant compressors. This is often done to achieve more flexibility in adjusting the rotational speed of the refrigerant compressors as required by the refrigeration and liquefaction process. However, the use of gas turbine engines, electric generators and electric motors in a cascade arrangement to drive the refrigerant compressors is inefficient from the point of view of the overall energy conversion efficiency, and from the point of view of the overall footprint of the rotating machinery.

Depending upon the production capability of the gas well, high or very high power rates are required to drive the refrigerant compressor trains, and therefore compact gas turbine engines with high power rates are desirable.

Aeroderivative gas turbine engines are compact machines and thus particularly desirable in offshore applications. As commonly understood in the art of gas turbine engines and as used herein, the term aeroderivative gas turbine engine is used to designate a gas turbine engine which at least partly uses equipment which has been designed for aircraft transportation. These gas turbines are characterized by compactness and reduced weight. However, these machines have some limitations in terms of availability and power rate.

It would thus be desirable to develop a gas turbine engine and a system using it, which overcomes or alleviates one or more of the limitations of the current art.

### SUMMARY

According to one aspect of the present disclosure, a gas turbine system is provided. The gas turbine system comprises an aeroderivative gas turbine engine and a load drivingly coupled to the gas turbine engine through a shaft line. The gas turbine engine can comprise a high-pressure turbine section and a high-pressure compressor section, drivingly coupled to one another by a first turbine shaft.

In particular, the high-pressure turbine section has a high-pressure turbine rotor and the high-pressure compressor section has a high-pressure compressor rotor. The high-pressure turbine rotor and the high-pressure compressor rotor can be mechanically coupled to one another by the first turbine shaft, or form a single body therewith. The unit composed of the high-pressure turbine rotor, the high-pressure compressor rotor and the first turbine shaft form a high-pressure rotor, sometimes referred to as a first spool of the gas turbine engine.

The gas turbine engine can further comprise an intermediate-pressure turbine section and a low-pressure compressor section, drivingly coupled to one another by a second turbine shaft. The first turbine shaft and the second turbine shaft can be coaxially arranged. The second turbine shaft can extend through the first turbine shaft.

In particular, the intermediate-pressure turbine section can have an intermediate-pressure turbine rotor and the low-pressure compressor section can have a low-pressure compressor rotor. The intermediate-pressure turbine rotor and the low-pressure compressor rotor can be mechanically coupled to one another by the second turbine shaft, or form a single body therewith. The unit composed of the intermediate-pressure turbine rotor, the low-pressure compressor rotor and the second turbine shaft form a low-pressure rotor, sometimes referred to as a second spool of the gas turbine engine.

The gas turbine engine can further comprise a combustor section fluidly coupled to the high-pressure compressor section and to the high-pressure turbine section, and configured to receive compressed air from the high-pressure compressor section and fuel, to mix the fuel and air streams and to ignite the air/fuel mixture to produced compressed, high-temperature combustion gas.

The gas turbine engine can further include a free power turbine. The free power turbine, can be part of a low-pressure turbine section or free power turbine section. The free power turbine, and more specifically the rotor thereof, can be supported by a third turbine shaft.

The third turbine shaft can have a load coupling end directly coupled to the shaft line, such that the shaft line and the third turbine shaft can rotate at substantially the same rotational speed.

In embodiments disclosed herein the free power turbine can be adapted to generate a maximum mechanical power rate of at least 65MW under ISO day conditions.

The power turbine and the third turbine shaft are mechanically uncoupled from the first turbine shaft and second turbine shaft, such that the rotational speed of the power turbine shaft and of the shaft line, which drivingly couples the load to the gas turbine engine, can be different from the rotational speed of the first spool and second spool. Moreover, the first spool and the second spool can be put sequentially into rotation at turbine start-up and the free power turbine can initiate rotation when suitable operating conditions of the first spool and second spool have been achieved. This can be particularly useful for instance to start rotation of a load which includes gas compressors arranged in a partially or fully pressurized circuit. The compressor can thus be put into operation without having to vent the gas circuit, whereof the compressor forms part.

According to a further aspect, the present disclosure provides a method of operating a gas turbine system comprising the following steps:
providing an aeroderivative gas turbine engine comprising: a high-pressure turbine section and a high-pressure compressor section, drivingly coupled to one another by a first turbine shaft; an intermediate-pressure turbine section and a low-pressure compressor section, drivingly coupled to one another by a second turbine shaft, the first turbine shaft and the second turbine shaft being coaxially arranged, the second turbine shaft extending through the first turbine shaft; a combustor section fluidly coupled to the high-pressure compressor section and to the high-pressure turbine section; a free power turbine, supported by a third turbine shaft, which is mechanically uncoupled from the first turbine shaft and the second turbine shaft, the third turbine shaft having a load coupling end directly coupled to the load shaft, such that the load shaft and the third turbine shaft rotate at the same rotational speed; and wherein the free power turbine is adapted to produce a maximum mechanical power rate of at least 65MW under ISO day conditions;
providing a load having a load shaft drivingly coupled to the gas turbine engine, said load comprising a compressor train comprising at least one gas compressor, said gas compressor forming part of a closed, at least partially pressurized fluid circuit;
starting rotation of the first turbine shaft with a starter;
igniting the combustor section, generating combustion gas therewith, expanding said combustion gas in the high-pressure turbine section and producing mechanical power therewith to rotate the high-pressure compressor section;
starting rotation of the intermediate-pressure turbine section and producing mechanical power therewith to rotate the low-pressure compressor section;
starting rotation of the free power turbine and of the load;
gradually increasing the rotational speed of the free power turbine and of the load up to a required nominal rotational speed, continuously maintaining the circuit at least partially pressurized.

According to embodiments disclosed herein, the load may comprise one or more compressors, adapted to process one or more refrigerants of an LNG system. According to some embodiments the LNG system can be one of: a propane/mixed refrigerant LNG system, a dual mixed refrigerant LNG system, a single mixed refrigerant system, a cascade LNG system.

In some embodiments, a first compressor and a second compressor are arranged along the shaft line. In some embodiments the first compressor is arranged in a first refrigerant circuit and is adapted to compress a first refrigerant and the second compressor is arranged in a second refrigerant circuit and is adapted to compress a second refrigerant.

In some embodiments, the first compressor and the second compressor are arranged in a first refrigerant circuit and are adapted to sequentially compress a first refrigerant in the first refrigerant circuit.

Embodiments of the disclosure may further provide a gas turbine system comprising: an aeroderivative gas turbine engine and a load having a shaft line drivingly coupled to the gas turbine engine. The gas turbine engine can further comprise: a high-pressure turbine section and a high-pressure compressor section, drivingly coupled to one another by a first turbine shaft; an intermediate-pressure turbine section and a low-pressure compressor section, drivingly coupled to one another by a second turbine shaft, the first turbine shaft and the second turbine shaft being coaxially arranged, the second turbine shaft extending through the first turbine shaft; a combustor section fluidly coupled to the high-pressure compressor section and to the high-pressure turbine section; and a free power turbine, supported by a third turbine shaft, which is mechanically uncoupled from the first turbine shaft and the second turbine shaft, the third turbine shaft having a load coupling end directly coupled to the shaft line, such that the shaft line and the third turbine shaft rotate at the same rotational speed. The gas turbine system can further comprise a stationary base, whereon the load is mounted, as well as a removable skid adapted to be positioned on and connected to the stationary base. First links can be provided for connecting the gas turbine engine to the removable skid and to the stationary base. Further links can be provided to connect the gas turbine engine or a portion thereof to the removable skid, such that the removable skid can be removed from the stationary base together with the gas turbine engine or part thereof.

Features and embodiments are disclosed here below and are further set forth in the appended claims, which form an integral part of the present description. The above brief description sets forth features of the various embodiments of the present invention in order that the detailed description that follows may be better understood and in order that the present contributions to the art may be better appreciated. There are, of course, other features of the invention that will be described hereinafter and which will be set forth in the appended claims. In this respect, before explaining several embodiments of the invention in details, it is understood that the various embodiments of the invention are not limited in their application to the details of the construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting.

As such, those skilled in the art will appreciate that the conception, upon which the disclosure is based, may readily be utilized as a basis for designing other structures, methods, and/or systems for carrying out the several purposes of the present invention. It is important, therefore, that the claims be regarded as including such equivalent constructions insofar as they do not depart from the spirit and scope of the present invention.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig.1 illustrates a system comprising a gas compressor train driven by a gas turbine, according to embodiments disclosed herein;
Fig.2 illustrates a sectional view of a gas turbine engine according to embodiments of the present disclosure;
Fig.3 illustrates an exemplary embodiment of an LNG system comprising a gas turbine engine according to Fig.2 as a prime mover for a refrigerant compressor train;
Figs 4 to 9 illustrate further exemplary embodiments of LNG systems and gas compressor train arrangements for LNG applications;
Fig.10 shows a flow chart summarizing a method for starting a gas turbine engine motor for a gas compressor train;
Fig.11 illustrates a torque diagram as a function of the rotational speed of a compressor train;
Figs. 12 and 13 illustrate further exemplary embodiments of LNG systems and gas compressor trains according to the present disclosure;
Figs. 14A-14D illustrate a sequence for fast replacement of a gas turbine engine according to embodiments disclosed herein;
Figs. 15A-15C illustrate a sequence for fast replacement of a super-core of the gas turbine engine according to embodiments disclosed herein; and
Fig.16 illustrates a schematic side view of a further embodiment of a gas turbine engine and relevant inlet plenum and supporting skid and base plate in another embodiment.

### DETAILED DESCRIPTION OF EMBODIMENTS

The following detailed description of the exemplary embodiments refers to the accompanying drawings. The same reference numbers in different drawings identify the same or similar elements. Additionally, the drawings are not necessarily drawn to scale. Also, the following detailed description does not limit the invention. Instead, the scope of the invention is defined by the appended claims.

Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

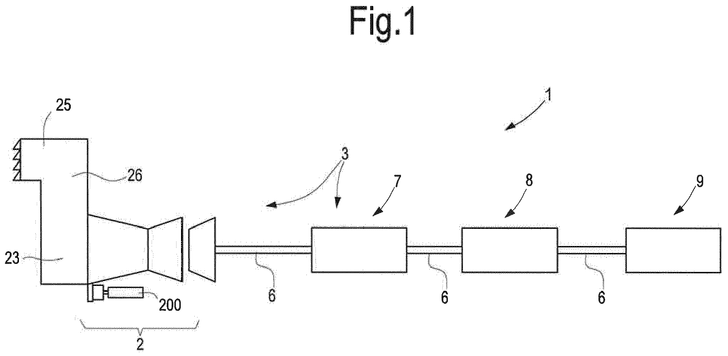

Fig.1 schematically illustrates a system 1 comprising a prime mover 2 and a load 3. In some embodiments the load 3 can comprise rotating equipment. Exemplary embodiments of the system 1 comprise a compressor train forming (part of) the load 3. The compressor train 3 can comprise a shaft line 6 and a plurality of rotating machines arranged there along. In the schematic of Fig. 1, the load 3 comprises three rotating machines 7, 8, 9, for instance three gas compressors for processing one or more refrigerant fluids circulating in a refrigerant circuit. The compressors can be part of one and the same closed circuit, for instance a refrigerant circuit of an LNG system. In other embodiments the compressors can belong to two or three different closed circuits, for separately processing respective gas flows, for instance refrigerant flows in an LNG system.

The prime mover 2 can be a gas turbine engine. In some embodiments the gas turbine engine 2 comprises an aeroderivative gas turbine engine.

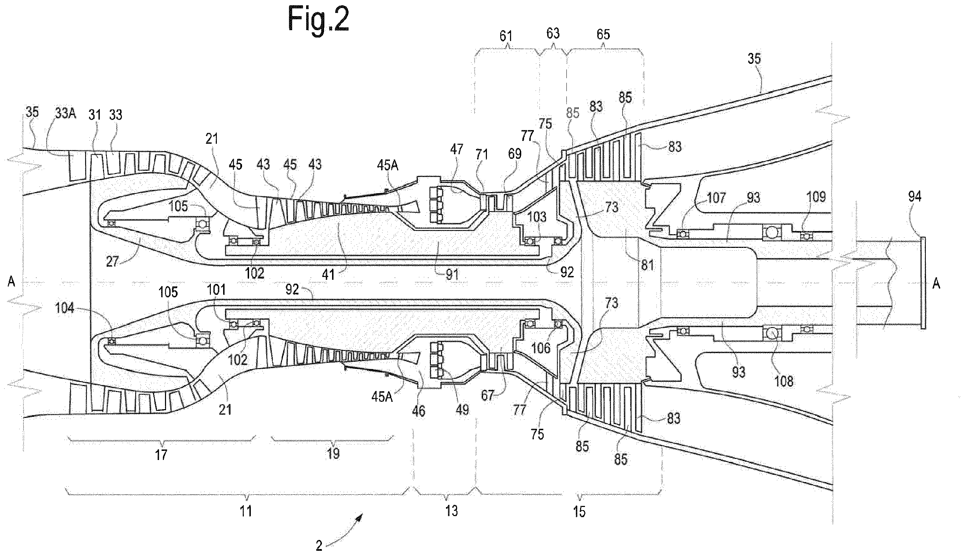

Fig. 2, with continuing reference to Fig.1, illustrates a sectional view of embodiments of a gas turbine engine 2 for driving a compressor train 3 as depicted in Fig.1. In exemplary embodiments disclosed herein the gas turbine engine 2 comprises a compressor section 11, a combustor section 13 and a turbine section 15.

According to some embodiments, the compressor section 11 comprises in turn a low-pressure compressor section 17 and a high-pressure compressor section 19. The low-pressure compressor section 17 can be fluidly coupled to the high-pressure compressor section 19 through an air flow passage 21. The low-pressure compressor section 17 can be fluidly coupled to an air inlet plenum, which receives ambient air through a filter housing 25 (Fig.1). The filter housing 25 can be fluidly connected to the air inlet plenum 23 through a clean-air duct 26. Air can be pre-treated, for instanced can be chilled prior to be ingested by the low-pressure compressor section 19. In some arrangements, air is not chilled prior to be delivered to the low-pressure compressor section 19 from the environment, such that a chilling arrangement and relevant equipment can be dispensed with, which results in a more compact arrangement.

As shown in the schematic of Fig. 2, the low-pressure compressor section 19 can comprise a low-pressure compressor rotor 27 rotating around a gas turbine axis A-A. The low-pressure compressor rotor 27 can comprise a plurality of circular arrangements of rotating blades 31. In the exemplary embodiment of Fig. 2, the low-pressure compressor rotor 27 comprises four circular arrangements of rotating blades 31, which rotate integrally with the low-pressure compressor rotor 27.

The low-pressure compressor section 17 can further comprise a plurality of circular arrangements of stationary blades 33, stationarily arranged in a casing 35. Each circular arrangement of stationary blades 33 is combined with a respective one of said circular arrangements of rotating blades 31. Each pair of consecutively arranged rotating blade arrangement and stationary blade arrangement forms a low-pressure compressor stage. In exemplary embodiments disclosed herein the low-pressure compressor section 17 comprises four low-pressure compressor stages. A set of inlet guide vanes 33A can also be arranged upstream of the most upstream set of rotating blades 31. A set of stationary blades can be arranged between the low-pressure compressor section 17 and the high-pressure compressor section 19 to straighten the gas flow between the two sections.

In the context of the present specification, the terms downstream and upstream are referred to the direction of an air or gas flow through the machinery, unless differently specified.

The inlet guide vanes 33A can be variable inlet guide vanes, i.e. they can be mounted on the casing 35 such as to be capable of pivoting around respective substantially radial pivoting axes. The blades of one, some or all the circular arrangements of stationary blades downstream of the inlet guide vanes 33A can have a variable geometry. A stationary blade of a variable-geometry blade arrangement can be supported on the casing 35 such as to be capable of rotating around a substantially radial pivoting axis. A "substantially radial pivoting axis" as used herein may be understood as an axis which is oriented substantially orthogonal to the gas turbine axis A-A, i.e. the axis around which the rotating parts of the gas turbine engine 2 rotate.

According to embodiments disclosed herein the high-pressure compressor section 19 can comprise a high-pressure compressor rotor 41 arranged for rotation around gas turbine axis A-A, and therefore coaxial to low-pressure compressor rotor 27. The high-pressure compressor rotor 41 can comprise a plurality of circular arrangements of rotating blades 43. In the exemplary embodiment of Fig. 2, the high-pressure compressor rotor 41 comprises nine circular arrangements of rotating blades 43, which rotate integrally with the low-pressure compressor rotor 41.

The high-pressure compressor section 19 can further comprise a plurality of circular arrangements of stationary blades 45, stationarily arranged in the casing 35. A circular arrangement of stationary blades 45 is combined with each circular arrangement of rotating blades 43. Each pair of consecutively arranged stationary blade arrangement and rotating blade arrangement forms a high-pressure compressor stage.

In exemplary embodiments disclosed herein the high-pressure compressor section 19 comprises nine high-pressure compressor stages.

A final set of output guide vanes 45A can be further provided downstream of the nine high-pressure compressor stages in order to straighten the flow at the outlet of the high-pressure compressor section.

The blades of one, some or all the circular arrangements of stationary blades of the high-pressure compressor section 19 can have a variable geometry. In some embodiments, none of the stationary blades arrangement has a variable geometry. Also in the high-pressure compressor section, as in the low-pressure compressor section, each stationary blade of a variable-geometry blade arrangement can be supported on the casing 35 such as to be capable of rotating around a substantially radial pivoting axis.

The high-pressure compressor section 19 is in fluid communication with the combustor section 13 through the set of stationary blades 45A and high-pressure air flow passage 46.

The combustor section 13 can comprise an annular combustion chamber 47. In some embodiments, a plurality of fuel nozzles 49 are annularly arranged along the annular combustion chamber 47 and around the gas turbine axis A-A. In preferred embodiments, the combustor section 13 comprises a dry-low-emission system, commonly named DLE system in the art. The dry-low emission system provides for a reduction of noxious CO and/or NOx emissions without the need for adding water in the combustion chamber.

In some embodiments the combustor section can comprise a diffusion combustor.

Compressed air delivered by the high-pressure compressor section 19 is mixed with a gaseous or liquid fuel and the air/fuel mixture is ignited in the combustor section 13 to generate pressurized, high-temperature gas that is delivered to the turbine section 15, which is fluidly coupled to the combustor section 13.

The turbine section 15 can in turn comprise several turbine sub-sections in sequence. In exemplary embodiments disclosed herein, the main turbine section 15 can comprise a high-pressure turbine section 61, arranged directly downstream of the combustor section 13. An intermediate-pressure turbine section 63 can be arranged downstream of the high-pressure turbine section 61. Moreover, a power-turbine section, or low-pressure turbine section 65 can be arranged downstream of the intermediate-pressure turbine section 63. For the reasons which will become apparent later on, the power turbine section can also be referred to as "free power turbine section" and can include a "free power turbine" or "free turbine", comprising a free turbine rotor, also referred to as low-pressure turbine rotor, and a free turbine stator, or low-pressure turbine stator.

In exemplary embodiments disclosed herein the high-pressure turbine section 61 can comprise a high-pressure turbine rotor 67 arranged for rotation around the turbine axis A-A. The high-pressure turbine rotor 67 can comprise a plurality of sets of rotating blades, each set comprising a plurality of blades arranged in a circular configuration around the turbine axis A-A. In the embodiment of Fig. 2 the high-pressure turbine rotor 67 comprises two sets of rotating blades 69. A respective set of stationary blades 71 can be combined with each set of rotating blades. A first set of stationary blades 71 is thus arranged between the combustion chamber 47 and the first set of rotating blades 69 of the high-pressure turbine section 61. According to exemplary embodiments of the gas turbine engine 2, the high-pressure turbine section 61 comprises two sets of rotating blades 69 and two sets of stationary blades 71, which form two high-pressure turbine stages.

The intermediate-pressure turbine section 63 arranged downstream of the high-pressure turbine section 61 can comprise an intermediate-pressure turbine rotor 73 arranged in the casing 35 for rotation around the turbine axis A-A. The intermediate-pressure turbine rotor 73 can comprise a plurality of rotating blades 75 mounted for co-rotation therewith. In some embodiments, as shown in Fig. 2, the rotating blades 75 of the intermediate-pressure turbine rotor 73 can be arranged according to a single set of circumferentially arranged blades. The intermediate-pressure turbine section 63 can further include stationary blades 77. According to exemplary embodiments, as shown in Fig. 2, the stationary blades 77 form a single set of circumferentially arranged stationary blades 77 arranged upstream of the rotating blades 75. The circumferential set of stationary blades 77 and the circumferential set of rotating blades 75 form a single intermediate-pressure turbine stage.

The low-pressure turbine section or free power turbine section 65 can be arranged downstream of the intermediate-pressure turbine section 63 and can comprise a low-pressure turbine rotor 81, also referred to as free power turbine rotor 81, which is arranged in the casing 35 for rotation around the turbine axis A-A. The low-pressure turbine rotor 81 is sometimes referred to as the free power turbine, which in actual fact includes both the low-pressure turbine rotor 81 and a low-pressure turbine stator, also referred to as free power turbine stator.

Circumferential arrangements of rotating blades 83 can be mounted on the low-pressure turbine rotor 81. In some embodiments, four sets of circumferentially arranged rotating blades 83 are arranged on the low-pressure turbine rotor 81. Each set or arrangement of circumferentially arranged rotating blades 83 is combined with a set or arrangement of circumferentially arranged stationary blades 85, mounted on the casing 35 and forming the free power turbine stator, or low-pressure turbine stator. Each pair of sequentially arranged circumferential set of stationary blades 85 and relevant circumferential set of rotating blades 83 forms a respective stage of the low-pressure turbine section 65.

In embodiments disclosed herein the low-pressure turbine section, or power turbine section 65 can comprise four stages, each including a stationary set of blades 85 and a respective rotating set of blades 83 downstream thereof. The most upstream one of the stages of the low-pressure turbine section 65 can be arranged directly downstream of the single stage of the intermediate-pressure turbine section 63.

The high-pressure turbine section 61 and the intermediate-pressure turbine section 63 are thus in mutual flow communication with one another, such that gas which has partly expanded in the high-pressure turbine section 61 flows towards and through the intermediate-pressure turbine section 65. Therefrom, gas which has been partly expanded in the intermediate-pressure turbine section flows towards and through the low-pressure turbine section 65, which is fluidly coupled to the intermediate-pressure turbine section 63 arranged upstream thereof.

Combustion gas produced in the combustor section 13 thus expands sequentially in the high-pressure turbine section 61, in the intermediate-pressure turbine section 63 and in the low-pressure turbine section 65. The enthalpy drop in the combustion gas in each high-pressure, intermediate-pressure and low-pressure turbine sections generates a corresponding amount of mechanical power, which is exploited as described here below.

The high-pressure compressor rotor 41 and the high-pressure turbine rotor 67 are both mounted on or constrained to a first turbine shaft 91, for co-rotation therewith around the turbine axis A-A. The combination of the high-pressure compressor rotor 41, the high-pressure turbine rotor 67 and the first turbine shaft 91 form a first spool of the gas turbine engine. Sometimes, these three components are referred to cumulatively as a "first rotor" or "high-pressure rotor", or alternatively core rotor of the gas turbine engine 2. The high-pressure compressor rotor 41, the first turbine shaft 91 and the high-pressure turbine rotor 68 rotate at the same rotational speed. Mechanical power generated in the high-pressure turbine section 61 by expansion of the combustion gas between the pressure in the combustion chamber 47 and an intermediate pressure at the inlet of the intermediate-pressure turbine section 63 is exploited to rotate the high-pressure compressor rotor 41 and thus to boost the air pressure from the delivery pressure at the delivery side of the low-pressure compressor section 17 up to the air pressure at the inlet of the combustor section 13.

The low-pressure compressor rotor 27 and the intermediate-pressure turbine rotor 73 are both mounted on or constrained to a second turbine shaft 92, for co-rotation therewith around the turbine axis A-A. The combined low-pressure compressor rotor 27, intermediate-pressure turbine rotor 73 and second turbine shaft 92 form a second spool of the gas turbine engine. Sometimes, these three components are referred to cumulatively as a "second rotor" or "intermediate-pressure rotor" of the gas turbine engine 2. The low-pressure compressor rotor 27 and the intermediate-pressure turbine rotor 73 are thus mechanically coupled to one another and rotate at the same speed. Mechanical power generated by expanding gas through the intermediate-pressure turbine section 63 is used to rotate the low-pressure compressor rotor 27 through the second turbine shaft 92. The mechanical power generated by the gas expansion in the intermediate-pressure turbine section 63 is thus exploited to boost the pressure of air ingested by the gas turbine engine 2 from the ambient pressure to a first air pressure which is achieved in the air flow passage 21 that fluidly connects the delivery side of the low-pressure compressor section 17 and the high-pressure compressor section 19 to one another.

The first turbine shaft 91 is coaxial to the second turbine shaft 92. The first turbine shaft 91 is internally hollow, such that the second turbine shaft 92 extends through the first turbine shaft 91 and projects at both ends of the first turbine shaft 91 beyond opposite first and second ends of the first turbine shaft 91 and beyond the high-pressure compressor rotor 41 and the high-pressure turbine rotor 67.

With the above described arrangement, a first spool, comprising the high-pressure compressor rotor 41, the first turbine shaft 91 and the high-pressure turbine rotor 67 rotates at a first rotational speed. A second spool, comprising the low-pressure compressor rotor 27, the second turbine shaft 92 and the intermediate-pressure turbine rotor 73 rotates at a second rotational speed, which can be different from the first rotational speed.

As used herein a "spool" may be understood as the combination of a compressor section and a turbine section, wherein the compressor section contributes to boosting the pressure of air which is used to generate the combustion gas that expands in the turbine section.

The first and second spool in combination with the combustor section 13 are cumulatively referred to also as the "super-core" of the gas turbine engine 2. The first spool and the combustor section 13 in combination are cumulatively also referred to as the "core" of the gas turbine engine 2.

The low-pressure turbine rotor or free power turbine rotor 81 can be mounted on a third turbine shaft 93, for co-rotation therewith in the casing 35. The third turbine shaft 93 can be drivingly coupled to the shaft line 6 of the compressor train 3. In embodiments disclosed herein the third turbine shaft 93 can be hollow, to reduce the weight thereof and thus the overall weight of the gas turbine engine 2. The third turbine shaft 93 is axially aligned to the first turbine shaft 91 and the second turbine shaft 92, but external thereto.

The connection between the third turbine shaft 93 and the shaft line 6 can be a direct connection. A "direct connection" between a first rotating mechanical member and a second rotating mechanical member as used herein may be understood as a connection wherein the two mutually connected first and second rotating mechanical members rotate at substantially the same rotational speed. "Substantially the same rotational speed" of two rotating members as used herein may be understood in the sense that the rotational speed of the two rotating members is the same except for speed fluctuations which may be due to torsional deformations of transmission members, such as shafts, clutches, joints and the like, connecting the two mechanical members to one another, without however modifying, altering or modulating the transmission ratio.

By the above arrangement, the high-pressure compressor section 19 and the high-pressure turbine section 61 are mechanically coupled through the first turbine shaft 91 as well as fluidly coupled through the flow passage extending across the combustor section 13. The low-pressure compressor section 17 and the intermediate-pressure turbine section 63 are mechanically coupled through the second turbine shaft 92 and further fluidly coupled by the flow path extending through the high-pressure compressor section 19, the combustor section 13 and the high-pressure turbine section 63.

Conversely, the low-pressure turbine section 65 is only fluidly coupled to the intermediate-pressure turbine section 63, but is mechanically separated, i.e. uncoupled with respect to the first spool and the second spool. For this reason, the low-pressure turbine section 65 is also referred to as free power turbine section 65 or simply free power turbine, since it can rotate separately from the first spool and the second spool, at a rotational speed different from the rotational speed of the core and super-core of the gas turbine engine.

The low-pressure turbine section 65 and the third turbine shaft 93 form a "half-spool", which can rotate at a third rotational speed, which may be different from the first rotational speed of the first spool and/or from the second rotational speed of the second spool.

The first turbine shaft 91 and/or the second turbine shaft 92 and/or the third turbine shaft 93 can be supported by a plurality of bearings. In some embodiments one, some or preferably all bearings supporting the first turbine shaft 91 are rolling-contact bearing, rather than hydrostatic bearings, magnetic bearings or hydrodynamic bearings. Similarly, in some embodiments one, some or preferably all bearings supporting the second turbine shaft 92 are rolling-contact bearing, rather than hydrostatic bearings, magnetic bearings or hydrodynamic bearings. Also, in some embodiments one, some or preferably all bearings supporting the third turbine shaft 93 are rolling-contact bearing, rather than hydrostatic bearings, magnetic bearings or hydrodynamic bearings.

A "rolling-contact bearing" as used herein may be understood as a bearing comprising a first bearing component, or race, for co-rotation with the supported shaft and a second bearing component, or race, constrained to a supporting structure, which may be stationary, and further comprising rolling bodies, between the first bearing component and the second bearing component, which roll between and in contact with the first bearing component and the second bearing component to reduce friction therebetween.

Rolling-contact bearings are particularly advantageous as they require a limited amount of lubricant oil compared to hydrostatic or hydrodynamic bearings. Furthermore they are simpler and subject to less maintenance than magnetic bearings. Therefore they require less space for ancillary equipment.

The rolling-contact bearings may comprise rolling elements in form of rollers, balls or combinations thereof.

In some embodiments, one, some or all the first turbine shaft, second turbine shaft and third turbine shaft are supported by at least two radial bearings and at least one axial or thrust bearing. A "radial bearing" as used herein may be understood as a bearing having mainly a radial-load supporting capability, i.e. which is specifically configured to support loads oriented in a direction mainly orthogonal to the rotation axis of the bearing. An "axial bearing" or "thrust bearing" as used herein may be understood as a bearing having mainly an axial-load bearing capability, i.e. which is specifically configured to support a thrust or load oriented parallel to the rotation axis of the bearing.

The first turbine shaft 91 can be supported by a first, axial rolling-contact bearing 101, for instance a ball bearing. The first turbine shaft 91 can be further supported by a second, radial rolling-contact bearing 102. The bearings 101 and 102 can be arranged at a first end of the first turbine shaft 91. A third, radial rolling-contact bearing 103 can be further arranged for supporting the first turbine shaft 91 at the second end thereof. In some embodiments the second, radial bearing 102 and the third, radial bearing 103 can be a roller bearing. In some embodiments the first, axial bearing 101 may also have a radial load capability, in combination with an axial load capability, i.e. it can be adapt to support combined radial and axial loads.

In some embodiments the first, axial bearing 101 can be located at or near the upstream end of the first turbine shaft 91, i.e. the end facing the low-pressure compressor section. In exemplary embodiments, the second, radial bearing 102 can be located at or near the upstream end of the first turbine shaft 91. The third, radial bearing 103 can be located near the downstream end of the first turbine shaft 91, i.e. the end facing the low-pressure turbine section 65.

In some embodiments the first, axial bearing 101 can be arranged between the second, radial bearing 102 and the third, radial bearing 103. In other embodiments, as shown in Fig. 2, the second, radial bearing 102 can be arranged between the first, axial bearing 101 and the third, radial bearing 103.

The second turbine shaft 92 can be supported by a fourth rolling-contact bearing 104, for instance a roller bearing. The second turbine shaft 92 can be further supported by a fifth rolling-contact bearing 105. A sixth rolling-contact bearing 106 can be further arranged for supporting the second turbine shaft 92. In some embodiments the fourth bearing 104 and the sixth bearing 106 can be radial bearings. In some embodiments the fifth bearing 105 may be an axial bearing, i.e. a thrust bearing. In some embodiments the fifth, axial bearing 105 may also have a radial load capability, in combination with an axial load capability, i.e. it can be adapt to support combined radial and axial loads.

Two rolling-contact bearings supporting the second turbine shaft 92 can be arranged at one end of the second turbine shaft 92, and one rolling-contact bearing supporting the second turbine shaft 92 can be arranged at another end of the second turbine shaft 92. For instance two rolling-contact bearings can be arranged at or near the upstream end of the second turbine shaft 92, i.e. the end extending upstream of the first turbine shaft 91 and another rolling-contact bearing can be arranged at or near the downstream end of the second turbine shaft 92, i.e. the shaft end extending downstream of the first turbine shaft 91. In exemplary embodiments shown in Fig.2 the fourth, radial bearing 104 is arranged at the low-pressure compressor rotor 27. The fifth, axial bearing 105 is arranged at the low-pressure compressor rotor 27. The sixth, radial bearing 106 can be arranged at or near the intermediate-pressure turbine rotor 73.

By arranging bearings 103 and 106 in one and the same sump arrangement, the need of another supporting frame between intermediate-pressure turbine rotor 73 and low-pressure turbine rotor 81 is avoided.

Both the high-pressure compressor rotor 41 and the high-pressure turbine rotor 67 can thus be supported by the high pressure shaft 91, or first turbine shaft, according to an in-between bearings configuration, i.e. between a first group of bearings, e.g. bearings 101 and 102, and a second group of bearings, including only bearing 103, positioned near the end of the first turbine shaft 91 facing the free power turbine section, i.e. the low-pressure turbine section 65.

The intermediate-pressure turbine rotor 73 and the low-pressure compressor rotor 27 mounted on the second turbine shaft 92 can be supported according to a partly overhung configuration, i.e. on bearing 106 and on bearings 104 and 105, respectively.

In some embodiments the low-pressure turbine rotor, i.e. free power turbine rotor 81 is mounted in an overhung configuration on the third turbine shaft 93. In exemplary embodiments the low-pressure turbine rotor 81 can be mounted on a first upstream end of the third turbine shaft 93, which is facing the intermediate-pressure turbine rotor 73. The second, opposite end of the third turbine shaft 93, schematically shown at 94, is a load coupling end, adapted to be mechanically coupled to the shaft line 6 and to the driven load. The third turbine shaft 93 can be supported by three rolling-contact bearings, namely a seventh bearing 107, an eighth bearing 108, and a ninth bearing 109. The three bearings 107, 108, 109 supporting the third turbine shaft 93 can be arranged on one and the same side of the low-pressure turbine rotor 81, i.e. between the low-pressure turbine rotor 81 and the load coupling end 94 of the third turbine shaft 93. In particularly preferred embodiments, the seventh bearing 107 and the ninth bearing 109 can be radial bearings, while the intermediate eighth bearing 108 can be an axial or thrust bearing.

By arranging the bearings of the third turbine shaft 93 on the side opposite the high-pressure and intermediate-pressure turbine sections, the bearings are better protected against contaminants, in particular during maintenance interventions on the gas turbine engine. More specifically, the bearings of the third turbine shaft 93 are best protected against polluting contaminants for instance when the core and super-core of the gas turbine engine are opened and/or removed, for instance for maintenance, repair or replacement.

The gas turbine engine 2 can be dimensioned to provide a maximum power of at least 65MW and preferably between 65MW and 80 MW under ISO day operating conditions. As used herein, "ISO day operating conditions" or "ISO day conditions" or "ISO day" may be understood as those conditions as set forth in ISO 558:1980, i.e. at 15°C, 60% relative humidity and 101,315 Pa atmospheric pressure (sea level). The above power rating data relate the maximum power available from the gas turbine engine, i.e. the power generated by the free power turbine and available on the third turbine shaft 93, it being understood that the free power turbine can provide less power, i.e. a power below the rated maximum power, if so required by the load under certain load operating conditions.

According to some embodiments, the air flowrate at the inlet of the low-pressure compressor section can be between 150 and 200 kg/s, preferably between 160 and 195 kg/s, most preferably between 185 and 190 kg/s at full power rate (100% power rate) and under ISO day conditions.

The low-pressure compressor section 17 can be configured to provide a compression ratio between 1.2 and 3.0, for instance around 2.5 under maximum power operating conditions. The compressor section 11 as a whole can be configured to provide a compression ratio between 13 and 45, preferably between 15 and 41, more preferably between 33 and 37, for instance around 35 under maximum power operating conditions.

As illustrated in the schematic of Figs 1 and 2, the low-pressure compressor section 17 can be in direct flow communication with the clean-air duct 26 and the air temperature at the compressor section inlet can be substantially equal to the ambient temperature. Substantially equal as used herein may be understood in the sense that the air temperature at the first stage of the compressor section of the gas turbine engine is the temperature achieved by the air when passing through the filter housing, clean-air duct and any air inlet plenum in the absence of an air chiller. If an air chiller is omitted, the structure of the system 1 is simplified and the overall footprint thereof is reduced. A 65 MW rated power with no air chilling at the gas turbine engine inlet is particularly suitable to drive most of the LNG compressor trains.

Nevertheless, in some embodiments, air treatment can be provided at the gas turbine engine inlet. In some embodiments, air chilling, evaporation cooling, water injection or anti-icing air pre-treatment facilities can be provided at the air inlet.

As shown in Figs 1 and 2, air delivered by the low-pressure compressor section 17 is directly drawn at the inlet of the high-pressure compressor section 19, with no intermediate intercooling of the air, which again contributes to simplifying the structure of the system 1 and its footprint, making the system particularly suitable for offshore installations, for instance.

In particularly advantageous embodiments, the power rate of the gas turbine engine 2 is such that the gas turbine engine 2 provides sufficient power for driving the entire compressor train without the need for a helper under any environmental conditions, i.e. also if the ambient temperature increases above the design point. Dispensing with a helper makes the overall length of the shaft line 6 shorter thus contributing to a reduction of the overall footprint of the system 1, reduces the risk of failures, thus contributing to increase the availability of the system and reduces rotor-dynamic issues, making the compressor train more reliable.

In some embodiments the rotational speed of the free power turbine, i.e. the low-pressure turbine section 65, at or above a rated turbine power, can be set between around 1400 rpm and around 4000 rpm, for example between around 1500 rpm and around 4000 rpm, or between around 2000 rpm and around 4000 rpm. In exemplary embodiments, the rotational speed of the free power turbine 65 and thus of the third turbine shaft 93 under design operating conditions can be between around 2400 rpm and around 3800 rpm. In further preferred embodiments the rotational speed under design operating conditions can be set at 3429 rpm, such that the speed at 105% of the design point speed is 3600 rpm, which is particularly suitable for electric power generation applications at a frequency of 60Hz. The same gas turbine engine 2 can however be used in electric power generation applications at a frequency of 50 Hz.

Since refrigerant compressors in LNG applications usually rotate at rotational speeds around 3400 rpm, a nominal rotational speed of 3429 rpm makes the gas turbine engine 2 particularly suitable for LNG applications without the need for a speed reduction gearbox between the power turbine shaft (third turbine shaft 93) and the shaft line 6. By avoiding a gearbox along the shaft line 6 the total length of the shaft line and the footprint of system 1 can be reduced and the overall efficiency of the system can be increased, since mechanical losses due to the gearbox are avoided. While a rotational speed around 3400-3500 rpm, for instance 3429 rpm, can be set as the design speed, at rated turbine power, some embodiments of the gas turbine engine 2 disclosed herein offer flexibility in terms of rotational speed from around 1700 to around 3600 rpm, e.g. from around 1714 to around 3600 rpm, at or above rated turbine power.

According to some embodiments, the first turbine shaft 91, the high-pressure compressor rotor 41 and the high-pressure turbine rotor 67 are adapted to rotate at a rotational speed between around 8000 rpm and around 11000 rpm, preferably between around 8300 rpm and around 10500 rpm, for instance at or around 10270 rpm, at or above rated turbine power.

According to some embodiments, the second turbine shaft 92, the intermediate-pressure turbine rotor 73 and the low-pressure compressor rotor 27 are configured to rotate at a rotational speed between around 2500 rpm and around 4000 rpm, preferably between around 2650 rpm and around 3900 rpm, or between around 2650 rpm and around 3750 rpm, or between around 3100 rpm and around 3900 rpm, at or above rated turbine power.

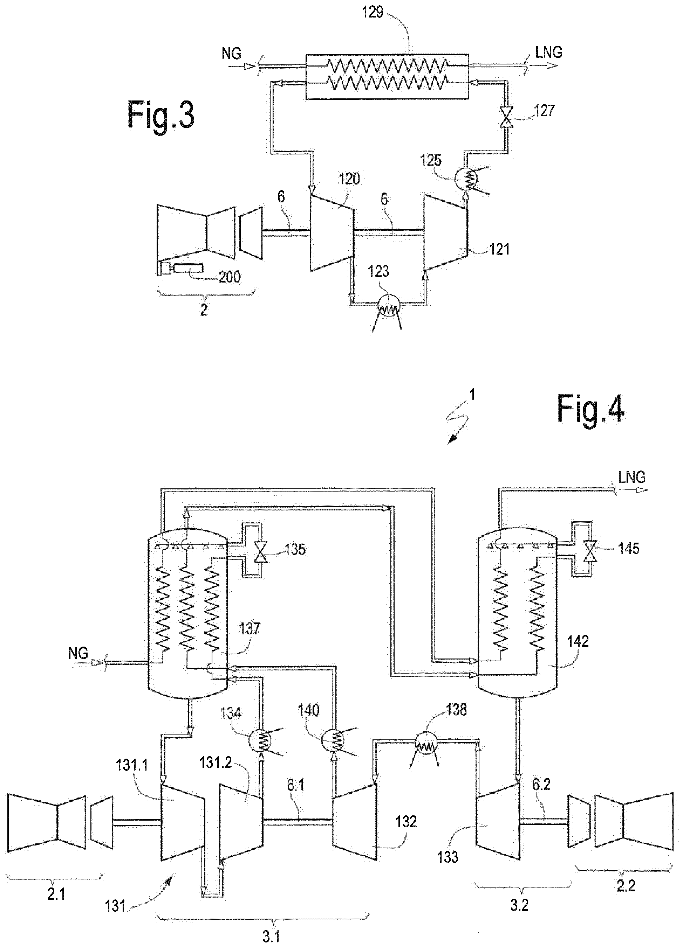

Fig.3, with continuing reference to Figs. 1 and 2, illustrates an exemplary embodiment of an LNG system using a gas turbine engine 2 as described above. In the embodiment of Fig. 3 an exemplary optimized single refrigeration cycle is shown. The LNG system 1 comprises a load 3, which can comprise a first refrigerant compressor 120 and a second refrigerant compressor 121, which can be driven through shaft line 6 by the same gas turbine engine 2. According to some embodiments, the first and second refrigerant compressors 120, 121 are adapted to process the same refrigerant fluid. In some embodiments, the same flowrate of refrigerant is processed in sequence by the first refrigerant compressor 120 and the second refrigerant compressor 121.

The first refrigerant compressor 120 and the second refrigerant compressor 121 are part of a refrigerant cycle 123, in which the refrigerant fluid is adapted to flow and to undergo cyclic thermodynamic transformations. The first compressor 120 compresses the gaseous refrigerant from a first pressure P1 to a second pressure P2. The partially compressed refrigerant can be cooled in an intercooler 123, for example by heat exchange against water or air, and can be further compressed to a third pressure P3 by the second refrigerant compressor 121. The compressed refrigerant at the third pressure P3 can be cooled and possibly condensed in a condenser 125 and expanded in an expander, e.g. a turbo-expander or a JT valve 127, to pressure P4. By expansion the refrigerant reaches a temperature lower than the liquefaction temperature of the natural gas to be liquefied.

The cold refrigerant is then caused to absorb heat from a flow of natural gas NG in one or more cold boxes 129, wherefrom the heated refrigerant is delivered to the first compressor 120, while the gas exits in a liquefied condition as liquefied natural gas LNG.

According to some embodiments, a compressor train driven by a single gas turbine engine 2 according to the exemplary embodiments disclosed herein can produce from about 1.5 MTPA (Million Tonnes per year) to about 1.8 MPTA of liquefied natural gas.

While Fig.3 shows a compressor train with two sequentially arranged refrigerant compressors, in other embodiments similar single-refrigerant cycles with one, or more than two refrigerant compressors driven by the same gas turbine engine 2 can be envisaged. Intercooling can be provided between each pair of sequentially arranged compressors, or only between some of them or none of them.

Fig.4 illustrates further exemplary embodiments of an LNG system using gas turbine engines 2 disclosed herein. In the exemplary embodiment of Fig.4 a first gas turbine engine 2.1 drives a first compressor train 3.1 through a first shaft line 6.1. A second gas turbine engine 2.2 drives a second compressor train 3.2 through a second shaft line 6.2. The first compressor train 3.1 can comprise a first compressor 131 and a second compressor 132. The first compressor 131 can comprise a single casing with two compressor phases 131.1 and 131.2. The second compressor train 3.2 can comprise a third compressor 133.

The LNG system of Fig. 4 can be a so-called dual mixed refrigerant LNG system, wherein two closed refrigerant circuits are provided.

A first refrigerant circuit can comprise the compressor 131, a condenser 134 and an expansion valve 135 or an expander. Compressed, condensed and expanded first refrigerant is used to pre-cool the natural gas and pre-cool a second refrigerant in a first cold box 137.

A second refrigerant circuit can comprise the third compressor 133 and the second compressor 132 arranged such that the second refrigerant flows through the third compressor 133 first and subsequently through the second compressor 132. An intercooler 138 can be provided to remove heat from the partly compressed second refrigerant delivered by the third compressor 133 to the second compressor 132. A heat exchanger 140 can be provided at the delivery side of the second compressor 132. The second refrigerant can be pre-cooled in the first cold box 137 and delivered to a second cold box 142, where the temperature of the second refrigerant can be further reduced prior to expansion in an expander or an expansion valve 145. The expanded second refrigerant then removes heat from the natural gas until liquefaction thereof, in the second cold box 142.

According to some embodiments, a system according to Fig. 4 using two gas turbine engines according to the present disclosure can provide a production of around 3-3.5 MTPA of liquefied natural gas.

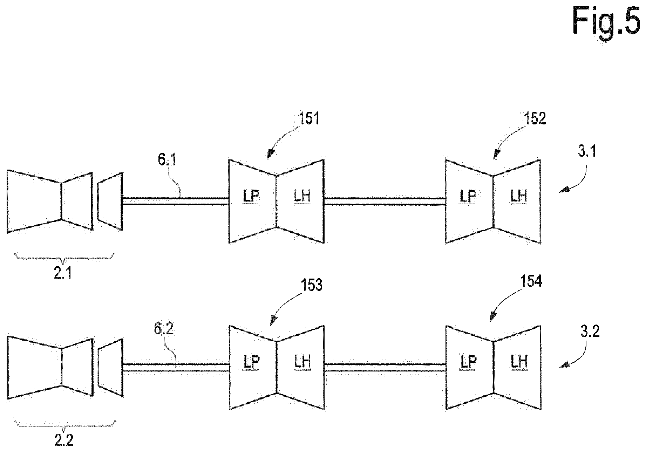

In order to prevent shutdown of the LNG production in case of failure of a rotating machine, the refrigerant compressors for a dual mixed refrigerant LNG system and the two gas turbine engines can be differently organized, for instance as shown in Fig. 5, where only the compressor trains and relevant gas turbine engines are shown. In this embodiment two substantially similar compressor trains 3.1, 3.2 are provided. Each train comprises two compressors, namely compressors 151, 152 on the shaft line 6.1 of the first compressor train 3.1, and compressors 153 and 154 on the shaft line 6.2 of the second compressor train 3.2. One, some or all compressors can be two-phase compressors, having for instance a low pressure section and a high pressure section. Intercooling can be provided between one, some or all pairs of low pressure/high pressure sections. One compressor of each compressor train can process a first refrigerant and the other compressor of each compressor train can process a second refrigerant.

The flow rate of each refrigerant cycle can thus be split on two compressor trains. Failure of one compressor train will not cause shutdown of the LNG system, since half production capacity will remain available.

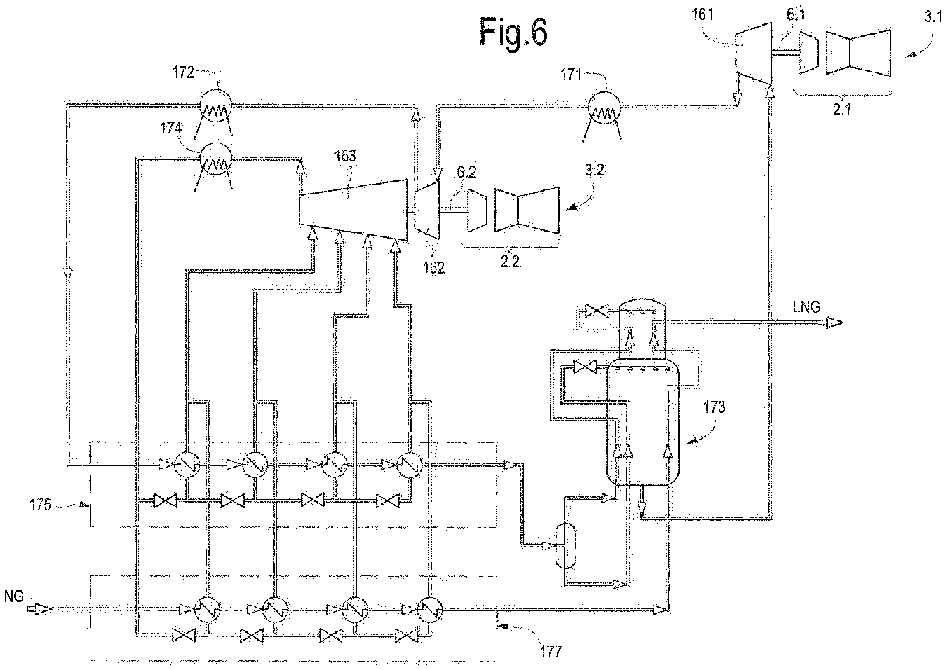

Comparable LNG production rates in the range of 3-3.5 MTPA can be achieved using two gas turbine engines as disclosed herein also in combination with other LNG cycles. Fig. 6 illustrates a propane/mixed refrigerant LNG system 1, wherein a first gas turbine engine 2.1 drives a first compressor train 3.1 having a first shaft line 6.1 and which can include a first refrigerant compressor 161. The first refrigerant compressor 161 can be adapted to compress mixed refrigerant at a first pressure. A second gas turbine engine 2.2 can be provided to drive a second compressor train 3.2, which can comprise a second refrigerant compressor 162 and can further comprise a third refrigerant compressor 163, coupled to the second gas turbine engine 2.2 through a second shaft line 6.2.

The second refrigerant compressor 162 can be adapted to compress the mixed refrigerant, which is delivered at a first pressure by the first compressor 161, to a second pressure, higher than the first pressure. The third refrigerant compressor 163 can be adapted to process a second refrigerant in a second refrigeration cycle. The second refrigerant can be propane. Details of the propane/mixed refrigerant system and relevant propane circuit and mixed refrigerant circuit are known to those skilled in the art and will therefore not be described in detail herein.

An intercooler 171 can be provided in the mixed refrigerant circuit, between the first compressor 161 and the second compressor 162. A heat exchanger or a condenser 172 can be arranged between the second compressor 162 and a main cryogenic heat exchanger 173.

A condenser 174 can be arranged between the delivery side of the third compressor 163 and a pre-cooling heat exchanger section 175, wherein propane is expanded at different pressure levels and used to pre-cool the mixed refrigerant upstream of the main cryogenic heat exchanger 173. A fraction of the compressed and condensed propane can be expanded at different pressure levels to pre-cool the natural gas in a natural gas pre-cooling heat exchange section 177, upstream of the main cryogenic heat exchanger 173.

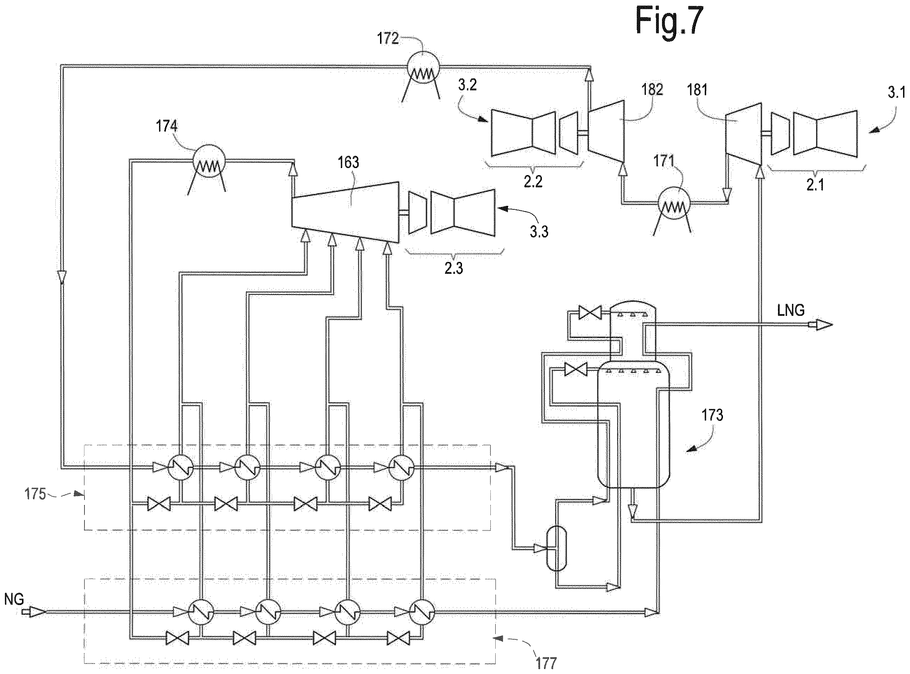

Larger production rates, around 4.5-5.5 MTPA can be achieved for instance using a propane/mixed refrigerant LNG system having a different number and arrangement of gas turbine engines. Fig. 7 illustrates a propane/mixed refrigerant LNG system 1, wherein the same reference numbers indicate the same or corresponding components as in Fig. 6. In the embodiment of Fig. 7, three gas turbine engines 2.1, 2.2 and 2.3 can be used to drive three compressor trains 3.1, 3.2 and 3.3. The first compressor train 3.1 can comprise a first shaft line 6.1 mechanically coupling the first gas turbine engine 2.1 to a first refrigerant compressor 181. The second compressor train 3.2 can comprise a second shaft line 6.2 which drivingly couples the second gas turbine engine 2.2 to a second compressor 183. The first refrigerant compressor 181 and the second refrigerant compressor 182 can form part of a first refrigerant circuit, e.g. adapted to circulate mixed refrigerant.

The third compressor train 3.3 can comprise a third shaft line 6.3, which drivingly couples the third gas turbine engine 2.3 to a third refrigerant compressor 183, adapted to process a second refrigerant fluid, for instance propane, circulating in the propane circuit. The three-train and three-turbine arrangement of Fig. 7 can be configured to produce between around 4.5 and 5.5 MTPA of liquefied natural gas.

Increasing production rates may require a larger number of gas turbine engines 2. According to some embodiments, the arrangement of Fig.6 can be doubled, using four gas turbine engines wherein: a first gas turbine engine and a second gas turbine engine can be adapted to drive a first compressor train and a second compressor train. The first and second compressor trains are arranged in parallel. Each compressor train can comprise a low-pressure mixed refrigerant compressor 161. A third gas turbine engine and a fourth gas turbine engine can be adapted to drive a third compressor train and a fourth compressor train which can be arranged in parallel. Each third compressor train and fourth compressor train can comprise a respective high-pressure mixed refrigerant compressor 162 and a propane compressor 163. Production rates around 6-7 MTPA can be achieved with a system where the refrigerant compression capacity is split by 50% on separate compressor trains.

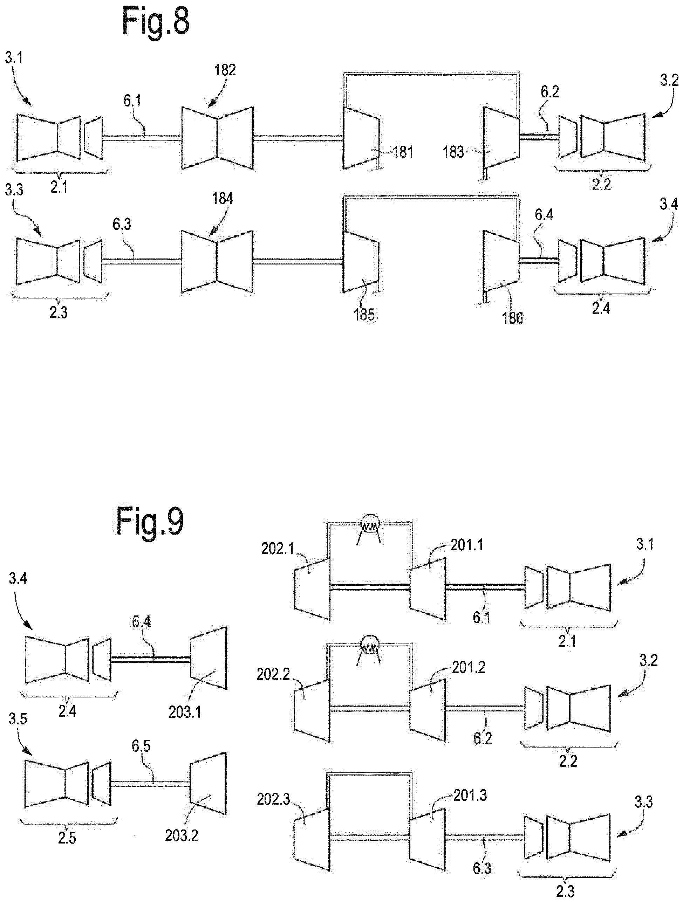

Similar production rates can be achieved also by using a dual mixed refrigerant system according to Fig. 4, with a larger number of gas turbine engines and compressor trains, as schematically shown in Fig. 8. In some embodiments, four gas turbine engines 2.1, 2.2, 2.3 and 2.4 can be used to drive four compressor trains 3.1, 3.2, 3.3, 3.4. The first compressor train 3.1 can comprise a shaft line 6.1 which connects a first compressor 181 and a second compressor 182 to the first gas turbine engine 2.1. The second compressor 182 can be a two-phase compressor. The second compressor train can comprise a shaft line 6.2 which drivingly connects the second gas turbine engine 2.2 to a third compressor train 3.3. In some embodiments a first refrigerant, for instance a first mixed refrigerant is sequentially compressed by compressor 183 and compressor 181. The third compressor 183 is thus a low-pressure compressor for a first refrigerant and the compressor 181 is a high-pressure compressor for the first refrigerant. A second refrigerant can be compressed by the compressor 182, e.g. by the two phases of the compressor 182. Intercoolers can be arranged between sequentially arranged compressors or compressor phases of a multiphase compressor.

The third and fourth compressor trains 3.3 and 3.4 can be configured and arranged in the same way as first and second compressor trains 3.1 and 3.2, such that the overall refrigerant flow rate is split among two identical sets of compressor trains. 2.3 and 2.4 designate the gas turbine engines for the third and fourth compressor trains 3.3 and 3.4. The gas turbine engine 2.3 drives compressors 184 and 185 through shaft line 6.3, and gas turbine engine 2.4 drives compressors 185 and 186 through shaft line 6.4. More generally, multiple arrangements of compressor trains as shown in Fig. 8 can be used, with more than four gas turbine engines and relevant compressor trains.

Yet further embodiments can be provided, wherein an even larger production capacity of e.g. around 6.5-8.0 MTPA is achieved. Fig.9 illustrates the arrangement of gas turbine engines and relevant compressor trains using five compressor trains and five gas turbine engines for processing propane and mixed refrigerant in a thermodynamic refrigeration cycle as shown in Figs. 6 and 7. Only the compressor trains and relevant movers are shown in Fig. 9. Three similar or identical compressor trains 3.1, 3.2 and 3.3 process each 1/3 of the total mixed refrigerant flow rate. Each train 3.j (j=1, 2, 3) can comprise a gas turbine engine 2.j, a shaft line 6.j, a low-pressure mixed refrigerant compressor 201.j and a high-pressure mixed refrigerant compressor 202.j. An intercooler between each low-pressure mixed refrigerant compressor and relevant high-pressure mixed refrigerant compressor can be provided. Two similar or identical trains 3.4, 3.5 can be provided to process the propane. A respective gas turbine engine 2.4 and 2.5 drive through shaft line 6.4 and 6.5 a corresponding propane compressor 203.1 and 201.2. Mixed refrigerant and propane are mentioned here as exemplary refrigerant fluids, which may be particularly advantageous in some applications and embodiments. The possibility of using other refrigerant fluids is however not excluded.

Similarly, in larger LNG systems a larger number of compressor trains and relevant gas turbine engines in parallel, as shown in Fig. 9 can be used.

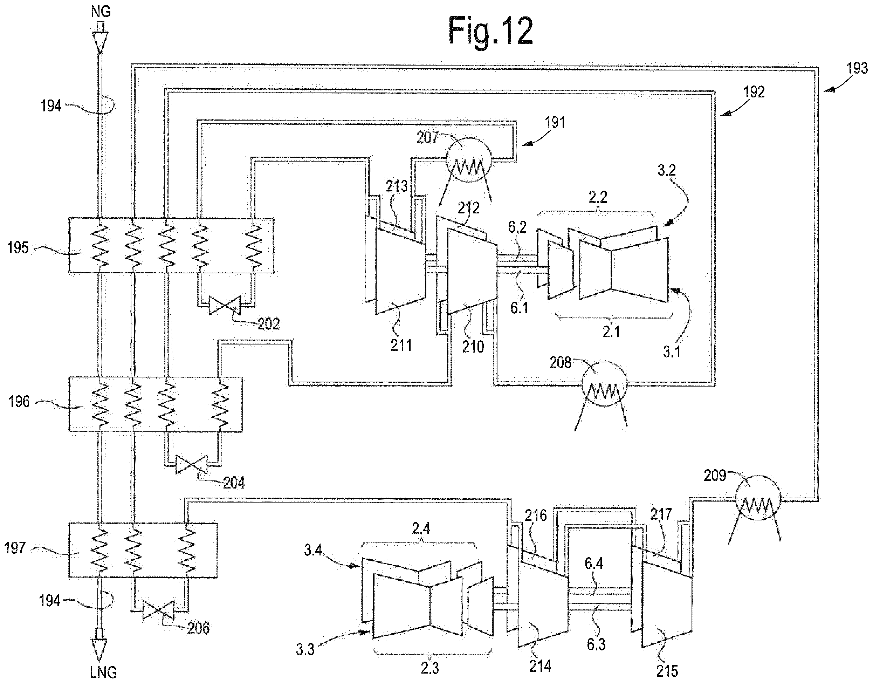

Fig. 12 illustrates a further LNG system where a gas turbine engine according to Fig.2 can be used. The system of Fig. 12 is a mixed fluid cascade process, comprising three refrigerant circuits 191, 192, 193, wherein the same or preferably different refrigerant fluids are circulated and are in heat exchange relationship with natural gas flowing in a natural gas line 194. Reference numbers 195, 196 and 197 illustrate heat exchangers or cold boxes wherein each refrigerant fluid exchanges heat against the natural gas and/or another refrigerant fluid, for pre-cooling the other refrigerant and/or chill or liquefy the natural gas.

The first refrigerant circuit 191 comprises a heat exchanger 198, where heat is removed from a compressed first refrigerant. Cooled and condensed first refrigerant is expanded in an expansion valve or an expander 202 and used to remove heat from the natural gas and other refrigerants in the first heat exchanger or cold box 195. Heated refrigerant gas is compressed by two gas compressor trains 3.1 and 3.2 in parallel, including respective gas turbine engines 2.1 and 2.2, wherein each gas turbine engine 2.1 and 2.2 can be configured as described above. Gas turbine engines 2.1 and 2.2 drive into rotation shaft lines 6.1 and 6.2 to rotate two gas compressors 210, 211 and 212, 213, respectively.

In some embodiments a first compressor of each compressor train 3.1 and 3.2 is adapted to process the first refrigerant, which circulates in the first refrigerant circuit 191. The second compressor of each compressor train can be adapted to process a second refrigerant, which circulates in the second circuit 192. The second circuit 192 can further comprise an expander 204 and a heat exchanger 208, where heat is removed from the compressed second refrigerant. The second circuit 192 extends through cold box 195 and cold box 196.

A third refrigerant circuit 193 is adapted to circulate a third refrigerant therein and extends through the first cold box 195, the second cold box 196 and the third cold box 197. Two compressor trains 3.3 and 3.4 can each comprise two compressors, forming part of the third refrigerant circuit 193. The two compressor trains 3.3 and 3.4 are arranged in parallel and each can process half the flow rate of the third refrigerant circulating in the third refrigerant circuit 193. The compressors 214, 215 of compressor train 3.3 are arranged in series and sequentially process a first fraction of the third refrigerant flow. The compressors 216, 217 of compressor train 3.4 are arranged in series and sequentially process a second fraction of the third refrigerant flow.

The third refrigerant circuit 193 can comprise a heat exchanger 209, where heat is removed from the compressed refrigerant fluid, and an expander or an expansion valve 206, where the third refrigerant is expanded.

According to some embodiments, an arrangement as shown in Fig. 12 can be adapted to produce for example between about 7 and about 8 MTPA liquefied natural gas.

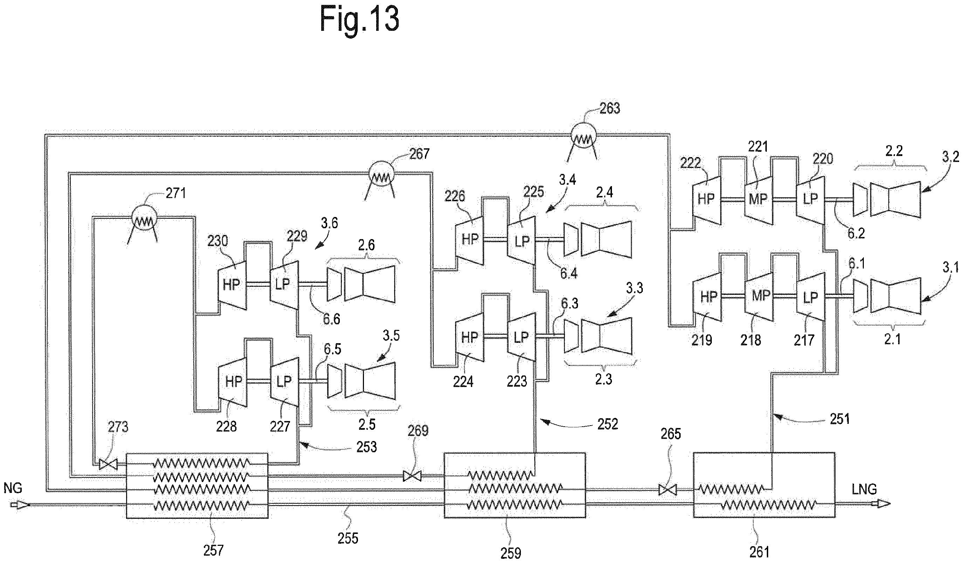

Other processes using a plurality of refrigerant circuits in a cascade arrangement can be advantageously equipped with gas turbine engines as disclosed herein. Fig. 13 illustrates a further LNG system using a cascade process. The cascade process used in the system of Fig. 13 can use for instance methane, ethylene and propane as refrigerant fluids in three refrigerant circuits arranged in a cascade configuration. In some embodiments, the system of Fig. 13 can produce for example between about 7 and about 8 MTPA liquefied natural gas.

According to embodiments of the LNG system of Fig. 13, a first refrigerant circuit 251 can be adapted to circulate and process methane as a first refrigerant. A second refrigerant circuit 252 can be adapted to circulate and process ethylene as a second refrigerant. A third refrigerant circuit 253 can be adapted to circulate and process propane as a third refrigerant. Natural gas (NG) to be transformed into liquefied natural gas (LNG) flows (line 255) sequentially through a heat exchanger 257, a cold box 259 and a further cold box 261.

The first refrigerant circulating in the first refrigerant circuit 251 can be compressed by two compressor trains 3.1 and 3.2 arranged in parallel, such that the total flow rate of the first refrigerant can be split and processed by two sets of compressors. Gas turbine engines 2.1 and 2.2 are adapted to drive shaft lines 6.1 and 6.2 of the two compressor trains 3.1 and 3.2. Each compressor train can comprise three compressors arranged in series. For example, the first compressor train 3.1 comprises compressors 217, 218 and 219. The second compressor train 3.2 comprises compressors 220, 221 and 222. Compressed first refrigerant in the gaseous state is cooled by heat exchange in a heat exchanger 263 and expanded in an expander or a JT expansion valve 265.

The second refrigerant circulating in the second refrigerant circuit 252 can be compressed by two compressor trains 3.3 and 3.4 arranged in parallel, such that the total flow rate of the second refrigerant can be split and processed by two sets of compressors. Gas turbine engines 2.3 and 2.4 are adapted to drive shaft lines 6.3 and 6.4 of the two compressor trains 3.3 and 3.4. Each compressor train can comprise two compressors arranged in series. For example, the first compressor train 3.3 comprises compressors 223 and 224. The second compressor train 3.4 comprises compressors 225 and 226. Compressed second refrigerant in the gaseous state is cooled by heat exchange in a heat exchanger 267 and expanded in an expander or a JT expansion valve 269.

The third refrigerant circulating in the third refrigerant circuit 253 can be compressed by two compressor trains 3.5 and 3.6 arranged in parallel, such that the total flow rate of the third refrigerant can be split and processed by two sets of compressors. Gas turbine engines 2.5 and 2.6 are adapted to drive shaft lines 6.5 and 6.6 of the two compressor trains 3.5 and 3.6. Each compressor train can comprise two compressors arranged in series. For example, the first compressor train 3.5 comprises compressors 227 and 228. The second compressor train 3.6 comprises compressors 229 and 230. Compressed second refrigerant in the gaseous state is cooled by heat exchange in a heat exchanger 271 and expanded in an expander or a JT expansion valve 273.

While some refrigerant cycles and systems, which can use one or more gas turbine engines as disclosed herein, have been described with reference to Figs. 3-9, 12 and 13, other LNG systems can be configured, using one or more gas turbine engines of the present disclosure.

The structure of the gas turbine engine 2 disclosed herein is particularly advantageous if used as a prime mover for refrigerant compressors in LNG facilities, or more generally to drive a compressor which is part of a closed fluid circuit. Use of a core and super-core as well as of a separate free power turbine facilitates starting the operation of the compressor or compressor train driven by the gas turbine engine 2. A small starting motor 200 can be provided to start rotation of the first turbine shaft 91, the high-pressure compressor rotor 41 and the high-pressure turbine rotor 67, i.e. to drive into rotation the first spool of the gas turbine engine 2. The starting motor can be an electric motor, a hydraulic motor or any other source of mechanical power, adapted to start rotation of the turbine core, i.e. first shaft 91, high-pressure turbine rotor 67 and high-pressure compressor rotor 41. A starter is schematically shown at 200 in Figs 1 and 3 and omitted in the other figures for the sake of simplicity. The starter 200 requires to initiate rotation of the core only, and therefore a limited power rate is sufficient. Low power starters are inexpensive and have small dimensions, and are thus particularly advantageous e.g. in offshore applications, or whenever space availability is limited.

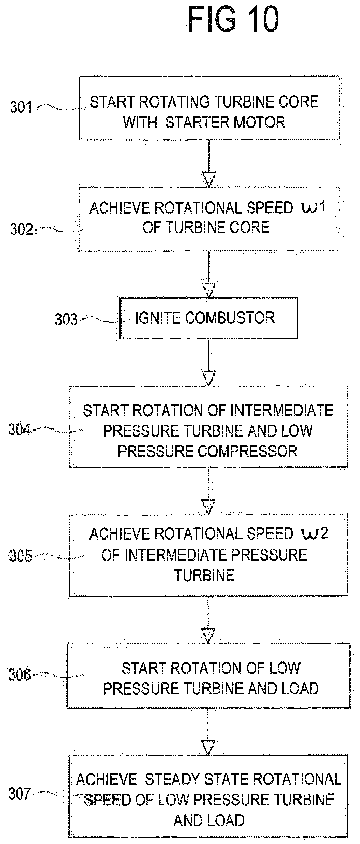

Fig. 10 illustrates a flow chart showing the main steps of a method for starting operation of a compressor train operated by a gas turbine engine 2 as described herein. The first step (block 301) comprises powering the starter motor to initiate rotation of the turbine core, i.e. the first turbine shaft 91, the high-pressure compressor rotor 19 and the high-pressure turbine rotor 67. Once a sufficient rotational speed (ω1) and therefore a sufficient air flowrate has been achieved (block 302), fuel delivery to the combustor section 47 starts and the combustor section 47 is ignited (block 303). Combustion gas is generated. The thermodynamically generated mechanical power generated by expanding the combustion gas in the high-pressure turbine section 61 is now sufficient to maintain rotation of the core and accelerate the core.

Rotation of the intermediate pressure turbine rotor and of the low pressure compressor rotor can then start (block 304) by expanding the combustion gas partly in the high-pressure turbine section 61 and partly in the intermediate-pressure turbine section 63. The mechanical power delivered by the intermediate-pressure turbine section 63 is used to rotate the low-pressure compressor section 17.

The fuel flow rate is increased, thus increasing the mechanical power delivered by the high-pressure and intermediate-pressure turbine sections 61 and 63, which in turn increases the air flow rate and compression ratio. The rotational speed of the intermediate-pressure turbine section 63 and thus the combustion gas flow rate increase until a rotational speed (ω2) is achieved (block 305).

Finally, the low-pressure turbine section or free power turbine section 65 starts rotating (block 306) providing sufficient torque to rotationally accelerate the load coupled to the third turbine shaft 93. The third turbine shaft 93, the low-pressure turbine section 65 and the load are gradually accelerated until steady state rotational speed is achieved (block 307).

Since the low-pressure turbine rotor or free power turbine rotor 81 is mechanically uncoupled from the first turbine shaft 91 and second turbine shaft 92, the core and the supercore can initiate rotation independently of the load, while the low-pressure turbine rotor will start rotation only when the combustion gas expanding therethrough generate sufficient torque to overcome the starting torque of the load. This allows the compressor(s) of the compressor train to start rotation even if the fluid circuit whereof they form part is pressurized. Starting the compressor train therefore does not require venting the circuit. This is particularly advantageous on the one hand because the time required to start the system and put it into effective operation is reduced, as venting and subsequent re-pressurizing of the circuit is not required. On the other hand, emission of potentially noxious gases in the atmosphere is avoided.

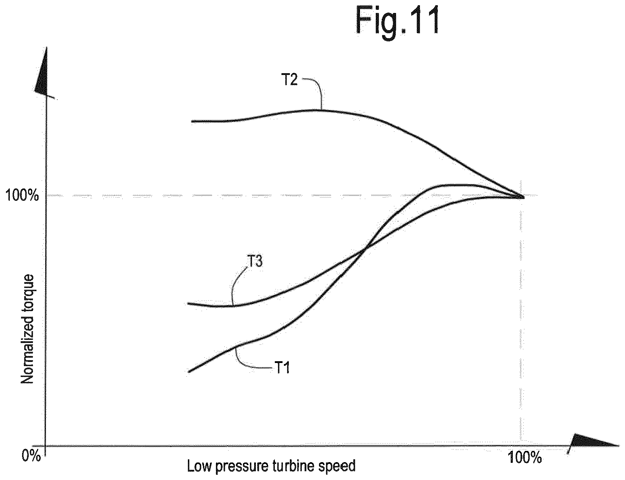

The torque required to initiate rotation of a compressor when the gas circuit is fully or partly pressurized and to achieve the full rotational speed is schematically represented in Fig. 11 by curve T1. Curve T2 represents the torque which is available from the low-pressure turbine section 65 in a gas turbine engine as disclosed herein. The available torque T2 from the gas turbine engine is always higher than the torque T1 to be applied for accelerating the shaft line 6. The compressor train can thus be launched without the need for a helper motor.

By way of comparison, curve T3 in Fig. 11 shows the torque available on the output shaft of a 2-spool or 3-spool direct drive gas turbine engine, i.e. a gas turbine engine which is not provided with a free power turbine section, mechanically uncoupled from the compressor section. As can be understood from the diagram of Fig. 1 1, the torque available in this case under certain operating conditions is lower than the torque needed to accelerate the shaft line and thus a helper becomes necessary or an at least partial depressurization of the circuit wherein the compressors are arranged is required to reduce the torque needed to accelerate the shaft line.

Embodiments of the gas turbine engine of the present disclosure can be combined with a removable skid configuration for speeding up and simplifying maintenance of the gas turbine engine or parts thereof, which increases the gas turbine engine availability.

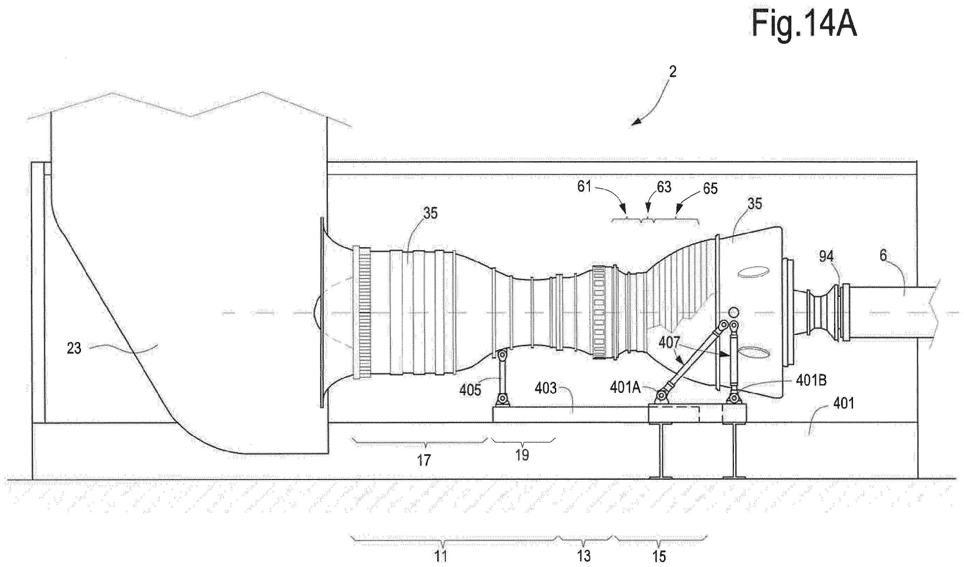

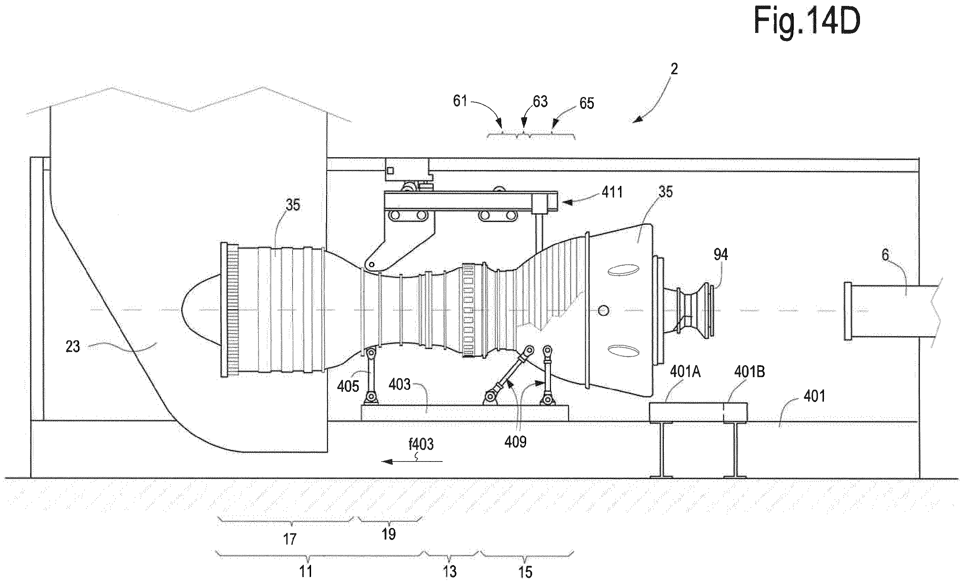

Figs. 14A-14D illustrate an exemplary sequence of operations for removing a gas turbine engine 2 from a compressor train 3. The reverse sequence from Fig. 14D to Fig 14A illustrates the operations for installing a replacement gas turbine engine. The same reference numbers designate the same or equivalent parts, elements or components already described so far. The gas turbine engine 2 can be supported on a main stationary base 401 and on a removable skid 403, mounted on the main stationary base 401.

The load can be mounted, directly or indirectly on the stationary base 401.

In some embodiments, first links 405 connect the casing 35 of the gas turbine engine 2 to the removable skid 403. The first links 405 can be located in the passage between the low-pressure compressor section 17 and the high-pressure compressor section 19 or in the aft region of the low-pressure compressor section or in the front region of the high-pressure compressor section. Second links 407 can connect the casing 35 of the gas turbine engine 2 to the stationary base 401, e.g. to blocks 401A, 401B thereof. The second links 407 can be connected at or near the low-pressure turbine section 65.

The removable skid 403 can be connected to the gas turbine engine 2 such that it will be removed along with the whole gas turbine engine 2, when this latter is removed for maintenance or replacement. Alternatively, the removable skid 403 can be removed with the super-core of the gas turbine engine 2, i.e. with the low-pressure compressor section 17, high-pressure compressor section 19, combustor section 13, high-pressure turbine section 61 and intermediate-pressure turbine section 63, if only the super-core shall be removed for replacement or maintenance, as will be described later on.

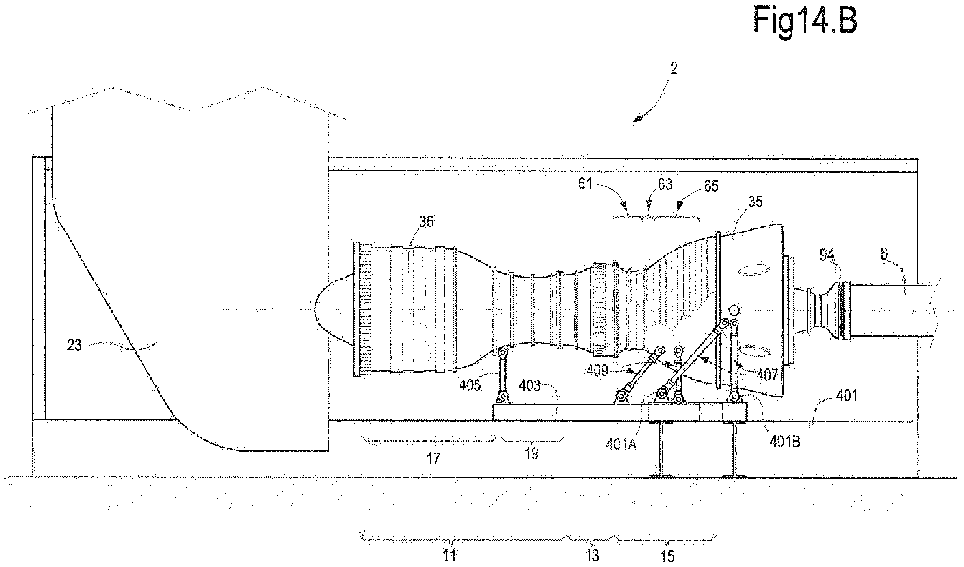

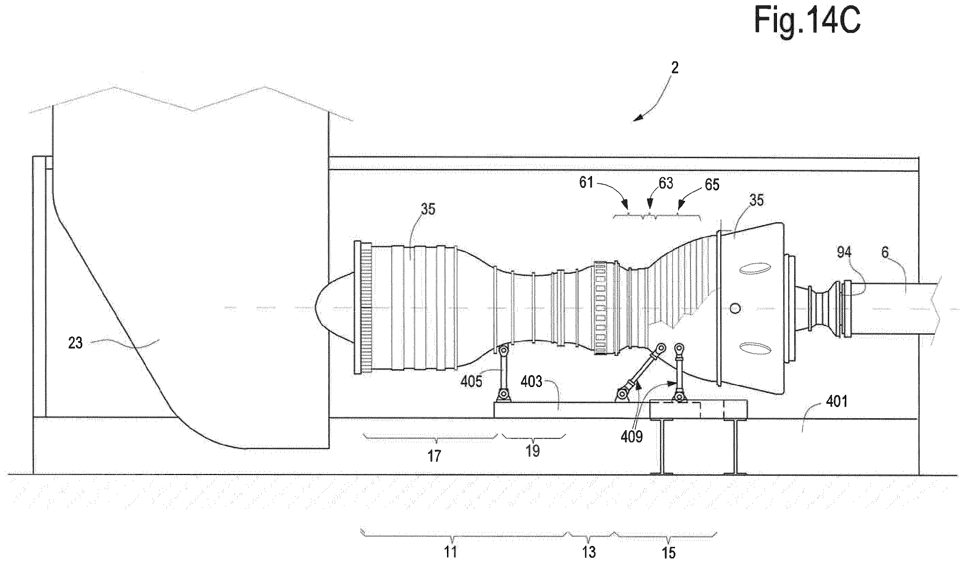

In Fig. 14B temporary links 409 are added, to connect the turbine section 15 to the removable skid 403. In Fig. 14C the links 407 have been removed, such that the entire gas turbine engine 2 is now supported on the removable skid 403 and unconnected from the stationary base 401. The gas turbine engine 2 is then mechanically separated from shaft line 6 and moved axially away from shaft line 6 as shown in Fig. 14D, by moving the removable skid 403 according to arrow f403.

The unit comprising the gas turbine engine 2 and the removable skid 403 can now be removed from the compressor train. Removal can be done by any suitable means. By way of example only, in Fig. 14D a turbine crane 311 is shown, which can be engaged to the gas turbine engine 2 and used to lift and remove the gas turbine engine 2 from the shaft line. In other embodiments, guide rails, movable shuttles or other moving means arranged above and/or below the gas turbine engine 2 can be used instead of a crane.

The reversed sequence from Fig. 14D to Fig. 14A can be used to mount a new gas turbine engine 2.

One of the critical aspects in gas turbine systems is the correct alignment of the gas turbine rotation axis with the shaft line rotation axis. The shaft line 6 and the third turbine shaft 93 must be perfectly aligned to one another to avoid rotor-dynamic problems, vibrations and dynamic stresses that may lead to malfunctioning or severe damages of the rotating equipment.

Axis alignment is a complex and time consuming operation which requires highly specialized engineering staff. According to embodiments disclosed herein, the removable skid 403 is configured such as to simplify and speed up the operations of turbine replacement by shifting the shaft alignment operations from the site of installation of the gas turbine engine 2 to a workshop. The stationary base 401 and the removable skid 403 can be provided with reference elements, which allow the removable skid 403 to be always mounted in a precisely defined position with respect to the stationary base 401 and therefore with respect to the rotation axis of the shaft line 6.

The gas turbine engine 2 can then be mounted on the removable skid 403 in perfect alignment with a mechanical or virtual reference template or reference system the position whereof with respect to the removable skid 403 is identical to the position of the shaft line axis when the removable skid 403 is mounted on the base 401.

In this way the gas turbine engine 2 is mounted on the removable skid 403 in a position such that, when the removable skid 403 with the gas turbine engine 2 mounted thereon is placed on the stationary base 401, the rotation axis of the gas turbine engine 2 will correctly align with the rotation axis of the shaft line 6, without the need for time consuming alignment operations on site.

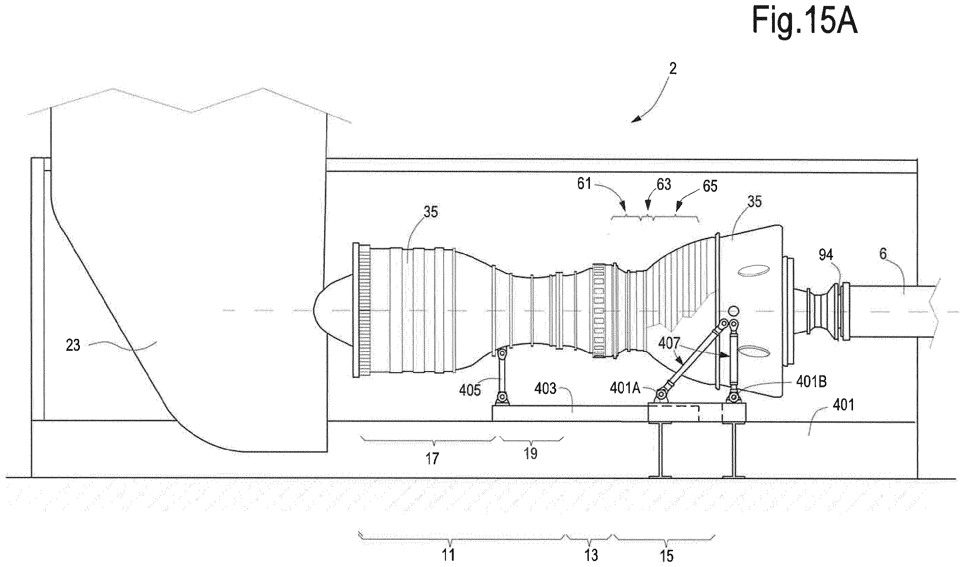

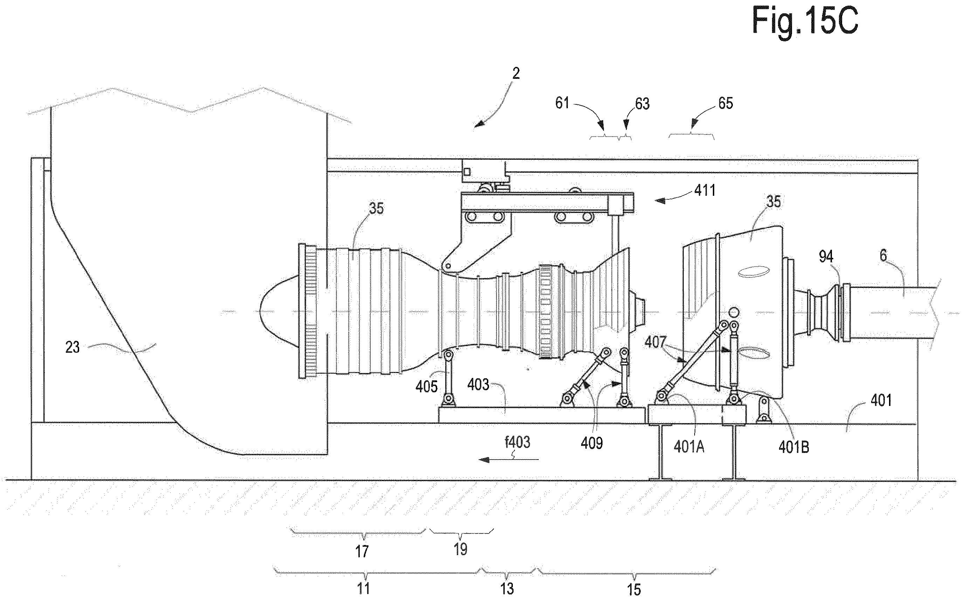

The same system disclosed above for the fast replacement of the whole gas turbine engine 2 can be used for facilitating and speeding up the replacement of the super-core of the gas turbine engine 2. A sequence for removing the super-core is illustrated the sequence from Fig. 15A to 15C- The reverse sequence from Fig 15C to Fig. 15A illustrates the installation of a new super-core. The same reference numbers indicate the same elements already described with reference to Figs. 14A-14D. These elements will not be described again.

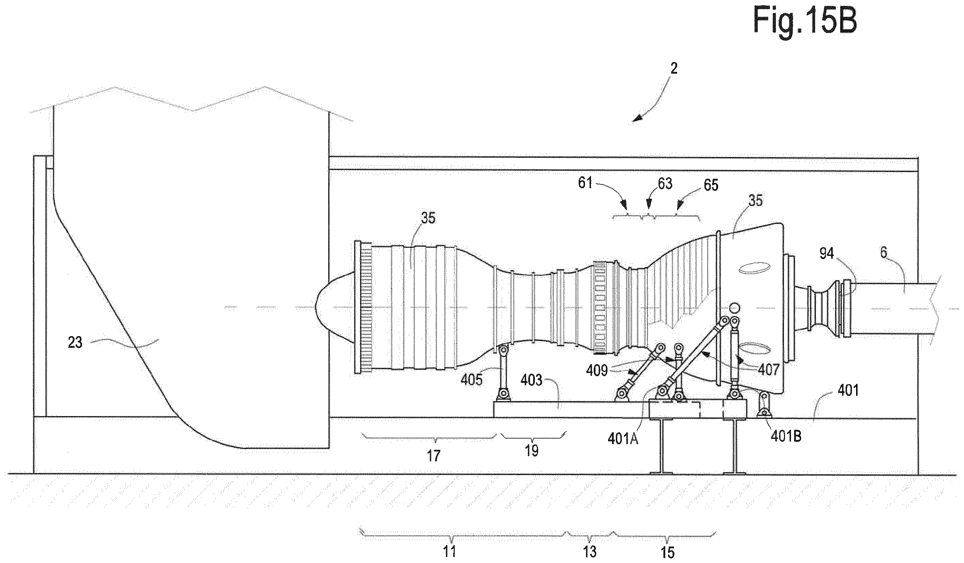

Figs. 15A and 15B correspond to Figs. 14A and 14B. In this case the links 407 are not removed and the low-pressure turbine section 65 remains mounted on the stationary base 401, while the super-core of the gas turbine engine 2 anchored to the removable skid 403 with temporary links 409 and distanced axially from the low-pressure turbine section 65. Subsequently the super-core and the removable skid 407 connected thereto are engaged to the turbine crane 411 or other suitable removing means, see Fig. 15C.

The super-core to be installed can be aligned on the removable skid 407 in a workshop, where a reference template allows correct positioning the rotation axis of the super-core with respect to the removable skid 403, such that when the removable skid 403 is mounted again on the stationary base 401, the super-core rotation axis automatically align with the rotation axis of the low-pressure turbine section 65.

Also disclosed herein are the following methods of replacing a gas turbine engine or part thereof, for instance the super-core thereof, in a gas turbine engine system, for instance an LNG system comprising a gas turbine engine as a prime mover.
Method 1:
   providing a stationary base with a shaft line of a load positioned with respect to the stationary base;
   mounting a gas turbine engine according to embodiments disclosed herein, on a movable skid, and fine-tuning the position of the rotation axis of said gas turbine engine with respect to the movable skid;
   coupling the movable skid with the gas turbine engine mounted thereon to the stationary base, in a pre-set position, such that the rotation axis of the gas turbine engine is automatically aligned with the rotation axis of the shaft line.
Method 2:
   providing a stationary base with a shaft line of a load positioned with respect to the stationary base, and providing a first portion of a gas turbine engine, for instance a low-pressure turbine section of a gas turbine engine according to embodiments disclosed herein, coupled to the shaft line and mounted on the stationary base;
   mounting a second portion of the gas turbine engine, in particular a super-core thereof, on a movable skid, and fine-tuning the position of the axis of the second portion with respect to the movable skid;
   coupling the movable skid, and the second portion of the gas turbine engine mounted thereon, to the stationary base in a pre-set position, such that the rotation axis of the second portion of the gas turbine engine is automatically aligned with the rotation axis of the first portion of the gas turbine engine and with the shaft line previously mounted on the stationary base.

According to some embodiments, which may be combined with other embodiments disclosed herein, the assembling and disassembling of the gas turbine engine or part thereof from the gas turbine system can be further simplified and made faster by providing a removable inlet extension cone between the air inlet plenum 23 and the gas turbine engine proper.

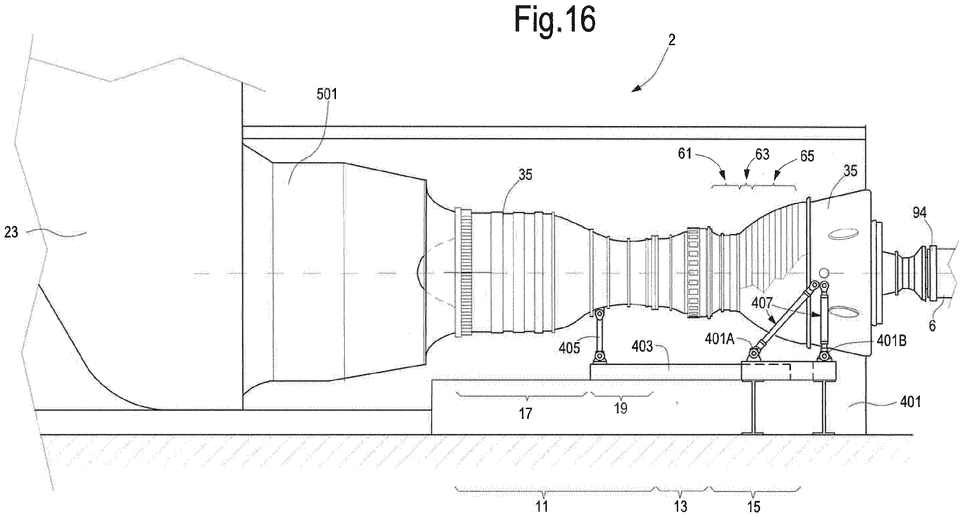

Fig. 16, with continuing reference to Figs. 1, 2, 14, 15, schematically illustrates a gas turbine system 1 comprising an air inlet plenum 23, a gas turbine engine 2 and a shaft 6 for connection to a load (not shown). Between the air inlet plenum 23 and the gas turbine engine 2 an intermediate inlet extension cone 501 is arranged. The inlet extension cone 501 provides a fluid connection between the air inlet plenum 23 and the air inlet of the low-pressure compressor section 17 of the gas turbine engine 2.

In some embodiments, the inlet extension cone 501 can be manufactured in lightweight material, such as, but not limited to, fiber reinforced resin, or the like. The light-weight cone 501 can be removed easily the gas turbine system, leaving free axial space between the air inlet plenum 23 and the gas turbine engine 2. Removing the gas turbine engine or part thereof from the shaft line, for instance according to the methods described above and shown in the sequences of Figs. 14 and 15, is thus made easier. Once the gas turbine engine 2 or a part thereof has been axially distanced from the load and moved proximate the air inlet plenum 23, it can be removed with a lateral displacement orthogonal to the axis of the gas turbine engine, without colliding against the air inlet plenum, and without the need to remove parts of this latter. Mounting of the gas turbine engine or a part thereof is also facilitated by the space made available by the removable inlet extension cone 501.

When a removable inlet extension cone is provided, neither the air inlet plenum nor the exhaust plenum of the gas turbine engine have to be removed, opened or dismantled. The space made available by removing the inlet extension cone 501 makes insertion or removal of the gas turbine engine, or part thereof easier and faster, since only a lateral displacement of the gas turbine engine or part thereof in a direction orthogonal to shaft line axis is required. The embodiment of Fig. 16 can be beneficial also in 2.5 spool gas turbine engines having a different power rate, for instance lower than 65 MW under ISO-day conditions. While the disclosed embodiments of the subject matter described herein have been shown in the drawings and fully described above with particularity and detail in connection with several exemplary embodiments, it will be apparent to those of ordinary skill in the art that many modifications, changes, and omissions are possible without materially departing from the novel teachings, the principles and concepts set forth herein, and advantages of the subject matter recited in the appended claims. Hence, the proper scope of the disclosed innovations should be determined only by the broadest interpretation of the appended claims so as to encompass all such modifications, changes, and omissions. In addition, the order or sequence of any process or method steps may be varied or re-sequenced according to alternative embodiments.

Various aspects and embodiments of the present invention are defined by the following numbered clauses:
1. A gas turbine system comprising:
   an aeroderivative gas turbine engine;
   a load having a shaft line drivingly coupled to the gas turbine engine;
   wherein the gas turbine engine comprises:
      a high-pressure turbine section and a high-pressure compressor section, drivingly coupled to one another by a first turbine shaft;
      an intermediate-pressure turbine section and a low-pressure compressor section, drivingly coupled to one another by a second turbine shaft, the first turbine shaft and the second turbine shaft being coaxially arranged, the second turbine shaft extending through the first turbine shaft;
      a combustor section fluidly coupled to the high-pressure compressor section and to the high-pressure turbine section;
      a free power turbine, supported by a third turbine shaft, which is mechanically uncoupled from the first turbine shaft and the second turbine shaft, the third turbine shaft having a load coupling end directly coupled to the shaft line, such that the shaft line and the third turbine shaft rotate at the same rotational speed; and wherein the free power turbine has a mechanical power rating of at least 65MW under ISO day conditions.
2. The gas turbine system of clause 1, wherein the load comprises a compressor train.
3. The gas turbine system of clause 2, wherein the compressor train comprise at least one gas compressor.
4. The gas turbine system of any preceding clause, wherein the compressor train comprises at least a first gas compressor and a second gas compressor mechanically coupled to one another by a shaft line, directly connected to the shaft line.
5. The gas turbine system of any preceding clause, wherein the first gas compressor, the second gas compressor and the shaft line are configured and arranged such that the first gas compressor and the second gas compressor rotate at the same rotational speed.
6. The gas turbine system of one or more of clauses 2 to 5, further comprising a natural gas liquefaction section, including a natural gas feed line and at least one refrigerant circuit, wherein a refrigerant fluid is adapted to circulate; wherein the refrigerant circuit comprises: at least one gas compressor of said compressor train, adapted to compress the refrigerant; a cold source, adapted to cool or condense compressed refrigerant from the gas compressor; an expander configured to expand the cooled or condensed refrigerant; and a heat exchanger in which the expanded refrigerant exchanges heat against at least one of the natural gas and another refrigerant.
7. The gas turbine system of one or more of clauses 2 to 6, wherein the compressor train is driven in rotation by mechanical power generated by the free power turbine only.
8. The gas turbine system of one or more of the preceding clauses, wherein the low-pressure compressor section is adapted to provide a compression ratio between 1.2 and 3.0, preferably around 2.5.
9. The gas turbine system of one or more of the preceding clauses, wherein the low-pressure compressor section and the high-pressure compressor section are adapted to provide cumulatively a compression ratio between 13 and 45, preferably between 15 and 41.
10. The gas turbine system of one or more of the preceding clauses, wherein the low-pressure compressor section has a total number of axial stages between two and five, preferably between two and four, most preferably four compressor stages.
11. The gas turbine system of one or more of the preceding clauses, wherein the high-pressure compressor section has a total number of nine axial compressor stages.
12. The gas turbine system of one or more of the preceding clauses, wherein the free power turbine has a total number of two to four turbine stages, preferably four stages.
13. The gas turbine system of one or more of the preceding clauses, wherein the intermediate-pressure turbine section has a single turbine stage.
14. The gas turbine system of one or more of the preceding clauses, wherein the high-pressure turbine section has a total of two turbine stages.
15. The gas turbine system of one or more of the preceding clauses, wherein the free power turbine is adapted to rotate at a nominal rotational speed between around 1400 rpm and around 4000 rpm, preferably between around 1500 rpm and around 4000 rpm, more preferably around 2000 rpm and 4000 rpm, even more preferably between around 2400 and around 3800rpm, most preferably of around 3429 rpm, at or above a rated power.
16. The gas turbine system of one or more of the preceding clauses, wherein the first turbine shaft, a high-pressure compressor rotor of the high-pressure compressor section and a high-pressure turbine rotor of the high-pressure turbine section are adapted to rotate at a rotational speed between around 8000 rpm and around 11000 rpm, preferably between around 8300 rpm and around 10500 rpm, at or above rated power.
17. The gas turbine system of one or more of the preceding clauses, wherein the second turbine shaft, the intermediate-pressure turbine section and the low-pressure compressor section are configured to rotate at a rotational speed between around 2500 rpm and around 4000 rpm, preferably between around 2650 rpm and around 3900 rpm, or between around 2650 rpm and around 3750 rpm, or between around 3100 rpm and around 3900 rpm, at or above rated power.
18. The gas turbine system of one or more of the preceding clauses, wherein the combustor section comprises a dry-low-emission combustion system configured to minimize CO and NOx emissions.
19. The gas turbine system of one or more of the preceding clauses, wherein the combustor section comprises an annular combustion chamber.
20. The gas turbine system of one or more of the preceding clauses, wherein the free power turbine has a speed range between 70% and 110% of a nominal rotational speed.
21. The gas turbine system of one or more of the preceding clauses, wherein the gas turbine engine is configured to have an air flowrate between 150 and 200 kg/s at ISO day conditions and 100% power output.
22. The gas turbine system of one or more of the preceding clauses, wherein the free power turbine comprises a free power turbine rotor supported in an overhung configuration by a bearing arrangement.
23. The gas turbine system of the preceding clauses, wherein the free power turbine rotor is mounted at an upstream end of the third turbine shaft, opposite to a load coupling end of the third turbine shaft, the bearing arrangement being located between the free power turbine rotor and the load coupling end.
24. The gas turbine system of the preceding clauses, wherein the bearing arrangement consists of rolling-contact bearings and wherein, preferably said bearing arrangement consists of two radial bearings and one axial bearing.
25. The gas turbine system of one or more of the preceding clauses, wherein the first turbine shaft and the second turbine shaft are supported by a first-shaft bearing arrangement and a second-shaft bearing arrangement, respectively, wherein the first-shaft bearing arrangement and the second-shaft bearing arrangement each comprises only rolling-contact bearings, and wherein preferably each first-shaft bearing arrangement and second-shaft bearing arrangement consists of two radial bearings and one axial bearing.
26. The gas turbine system of one or more of the preceding clauses, wherein the low-pressure compressor section and the high-pressure compressor section are fluidly coupled to one another without intercooling there between.
27. The gas turbine system of one or more of the preceding clauses, wherein the low-pressure compressor section has an air inlet fluidly coupled to a filter chamber, adapted to feed ambient air through the filter chamber to the gas turbine engine and to provide air to a most upstream compressor stage of the low-pressure compressor section at substantially ambient temperature.
28. The gas turbine system of one or more of the preceding clauses, further comprising: a stationary base, whereon the load is mounted; a removable skid adapted to be positioned on and connected to the stationary base; first links for connecting the gas turbine engine to the removable skid and to the stationary base; further links to connect the gas turbine engine or a portion thereof to the removable skid, such that the removable skid can be removed from the stationary base together with the gas turbine engine or part thereof.
29. The gas turbine system of the preceding clauses, wherein the stationary base and the removable skid are adapted to be coupled to one another in a pre-set positon, such that the position of the rotation axis of the gas turbine engine or part thereof can be fine-tuned with respect to the removable skid, and that once the removable skid is mounted on the stationary base in the pre-set position, the axis of the gas turbine engine or part thereof is automatically aligned with the axis of the shaft line.
30. The gas turbine system of one or more of the preceding clauses, further comprising: an air inlet plenum; a removable inlet extension cone, arranged between the air inlet plenum and the low-pressure compression section of the gas turbine engine.
31. A method of operating a gas turbine system comprising the following steps:
   providing an aeroderivative gas turbine engine comprising: a high-pressure turbine section and a high-pressure compressor section, drivingly coupled to one another by a first turbine shaft; an intermediate-pressure turbine section and a low-pressure compressor section, drivingly coupled to one another by a second turbine shaft, the first turbine shaft and the second turbine shaft being coaxially arranged, the second turbine shaft extending through the first turbine shaft; a combustor section fluidly coupled to the high-pressure compressor section and to the high-pressure turbine section; a free power turbine, supported by a third turbine shaft, which is mechanically uncoupled from the first turbine shaft and the second turbine shaft, the third turbine shaft having a load coupling end directly coupled to a shaft line, such that the shaft line and the third turbine shaft rotate at the same rotational speed; and wherein the free power turbine has a mechanical power rating of at least 65MW under ISO day conditions;
   providing a load drivingly coupled to the gas turbine engine through said shaft line, said load comprising a compressor train comprising at least one gas compressor, said gas compressor forming part of a closed, at least partially pressurized fluid circuit;
   starting rotation of the first turbine shaft with a starter;
   igniting the combustor section, generating combustion gas therewith, expanding said combustion gas in the high-pressure turbine section and producing mechanical power therewith to rotate the high-pressure compressor section;
   starting rotation of the intermediate-pressure turbine section and producing mechanical power therewith to rotate the low-pressure compressor section;
   starting rotation of the free power turbine and of the load;
   gradually increasing the rotational speed of the free power turbine and of the load up to a required nominal rotational speed, continuously maintaining the circuit at least partially pressurized.

## Claims

1. A gas turbine system comprising:
an aeroderivative gas turbine engine;
a load having a shaft line drivingly coupled to the gas turbine engine;
wherein the gas turbine engine comprises:
a high-pressure turbine section and a high-pressure compressor section, drivingly coupled to one another by a first turbine shaft;
an intermediate-pressure turbine section and a low-pressure compressor section, drivingly coupled to one another by a second turbine shaft, the first turbine shaft and the second turbine shaft being coaxially arranged, the second turbine shaft extending through the first turbine shaft;
a combustor section fluidly coupled to the high-pressure compressor section and to the high-pressure turbine section;
a free power turbine, supported by a third turbine shaft, which is mechanically uncoupled from the first turbine shaft and the second turbine shaft, the third turbine shaft having a load coupling end directly coupled to the shaft line, such that the shaft line and the third turbine shaft rotate at the same rotational speed; and wherein the free power turbine has a mechanical power rating of at least 65MW under ISO day conditions.

2. The gas turbine system of claim 1, wherein the load comprises a compressor train.

3. The gas turbine system of claim 2, wherein the compressor train comprise at least one gas compressor.

4. The gas turbine system of claim 2, wherein the compressor train comprises at least a first gas compressor and a second gas compressor mechanically coupled to one another by a shaft line, directly connected to the shaft line.

5. The gas turbine system of one or more of the preceding claims, wherein the first gas compressor, the second gas compressor and the shaft line are configured and arranged such that the first gas compressor and the second gas compressor rotate at the same rotational speed.

6. The gas turbine system of one or more of claims 2 to 5, further comprising a natural gas liquefaction section, including a natural gas feed line and at least one refrigerant circuit, wherein a refrigerant fluid is adapted to circulate; wherein the refrigerant circuit comprises: at least one gas compressor of said compressor train, adapted to compress the refrigerant; a cold source, adapted to cool or condense compressed refrigerant from the gas compressor; an expander configured to expand the cooled or condensed refrigerant; and a heat exchanger in which the expanded refrigerant exchanges heat against at least one of the natural gas and another refrigerant.

7. The gas turbine system of one or more of claims 2 to 6, wherein the compressor train is driven in rotation by mechanical power generated by the free power turbine only.

8. The gas turbine system of one or more of the preceding claims, wherein the low-pressure compressor section is adapted to provide a compression ratio between 1.2 and 3.0, preferably around 2.5.

9. The gas turbine system of one or more of the preceding claims, wherein the low-pressure compressor section and the high-pressure compressor section are adapted to provide cumulatively a compression ratio between 13 and 45, preferably between 15 and 41.

10. The gas turbine system of one or more of the preceding claims, wherein the low-pressure compressor section has a total number of axial stages between two and five, preferably between two and four, most preferably four compressor stages.

11. The gas turbine system of one or more of the preceding claims, wherein the high-pressure compressor section has a total number of nine axial compressor stages.

12. The gas turbine system of one or more of the preceding claims, further comprising: a stationary base, whereon the load is mounted; a removable skid adapted to be positioned on and connected to the stationary base; first links for connecting the gas turbine engine to the removable skid and to the stationary base; further links to connect the gas turbine engine or a portion thereof to the removable skid, such that the removable skid can be removed from the stationary base together with the gas turbine engine or part thereof.

13. The gas turbine system of claim 12, wherein the stationary base and the removable skid are adapted to be coupled to one another in a pre-set positon, such that the position of the rotation axis of the gas turbine engine or part thereof can be fine-tuned with respect to the removable skid, and that once the removable skid is mounted on the stationary base in the pre-set position, the axis of the gas turbine engine or part thereof is automatically aligned with the axis of the shaft line.

14. The gas turbine system of one or more of the preceding claims, further comprising: an air inlet plenum; a removable inlet extension cone, arranged between the air inlet plenum and the low-pressure compression section of the gas turbine engine.

15. A method of operating a gas turbine system comprising the following steps:
providing an aeroderivative gas turbine engine comprising: a high-pressure turbine section and a high-pressure compressor section, drivingly coupled to one another by a first turbine shaft; an intermediate-pressure turbine section and a low-pressure compressor section, drivingly coupled to one another by a second turbine shaft, the first turbine shaft and the second turbine shaft being coaxially arranged, the second turbine shaft extending through the first turbine shaft; a combustor section fluidly coupled to the high-pressure compressor section and to the high-pressure turbine section; a free power turbine, supported by a third turbine shaft, which is mechanically uncoupled from the first turbine shaft and the second turbine shaft, the third turbine shaft having a load coupling end directly coupled to a shaft line, such that the shaft line and the third turbine shaft rotate at the same rotational speed; and wherein the free power turbine has a mechanical power rating of at least 65MW under ISO day conditions;
providing a load drivingly coupled to the gas turbine engine through said shaft line, said load comprising a compressor train comprising at least one gas compressor, said gas compressor forming part of a closed, at least partially pressurized fluid circuit;
starting rotation of the first turbine shaft with a starter;
igniting the combustor section, generating combustion gas therewith, expanding said combustion gas in the high-pressure turbine section and producing mechanical power therewith to rotate the high-pressure compressor section;
starting rotation of the intermediate-pressure turbine section and producing mechanical power therewith to rotate the low-pressure compressor section;
starting rotation of the free power turbine and of the load;
gradually increasing the rotational speed of the free power turbine and of the load up to a required nominal rotational speed, continuously maintaining the circuit at least partially pressurized.
